# EUROPEAN PATENT SPECIFICATION

(11) **EP 1 278 912 B1**
(45) Date of publication and mention of the grant of the patent: **09.05.2007**
(21) Application number: 00990270.1
(22) Date of filing: 20.12.2000
(51) Int. Cl.: D21H 17/53, C08J 11/04, D21H 27/30, D21H 23/22, B32B 29/00, D21H 21/16, D21H 21/18

(54) **HYDROXY-PHENOXYETHER POLYMERS IN PAPERMAKING**
HYDROXY-PHENOXYETHERPOLYMERE IN DER PAPIERHERSTELLUNG
POLYMERES D'HYDROXY-PHENOXYETHER UTILISES DANS LA FABRICATION DU PAPIER

(30) Priority: 20.12.1999 US 172714 P; 05.04.2000 US 194959 P; 20.06.2000 US 212919 P; 25.08.2000 US 228188 P
(43) Date of publication of application: 29.01.2003
(73) Proprietor: Advanced Plastics Technologies, Ltd, Douglas, Isle of Man IM1 1JA (GB)
(72) Inventor: LEE, Robert A., Bowdon, Cheshire WA14 3JP (GB); HUTCHINSON, Gerald, A., Coto de Caza, CA 92679 (US); NAZIR, Basharat A., High Wycombe, Buckinghamshire HP11 2TW (GB); KLASS, Charles, P., Radnor, PA 19087 (US)
(74) Representative: Van Straaten, Joop
(86) International application number: PCT/US2000/034766
(87) International publication number: WO 2001/046523

(56) References cited:
- WO-A-99/12995
- WO-A-99/48962
- US-A- 5 834 078
- US-A- 6 011 111

## Description

### Background of the Invention

### Field of the Invention

This invention relates to paper and methods for making paper that involve the use of hydroxy-phenoxyether polymers to provide the paper with improved properties such as increased sizing and strength. This invention also relates to coated paper and laminates comprised of paper and hydroxy-phenoxyether polymers, and to methods for making them. In preferred embodiments, the paper and laminates are recyclable.

### Description of the Related Art

Paper is a highly versatile material that is used throughout the world for a variety of applications. The properties of paper tend to be dominated by the properties of the cellulosic materials from which it is made, unless additives are used to modify, control or enhance these properties. To some extent, the versatility of paper results from the degree to which the basic properties of cellulosic materials may be controlled by the use of papermaking additives. To this end, a wide variety of such additives are known to those skilled in the art.

For instance, the degree to which paper resists penetration by water and other liquids may be controlled through the use of sizing agents. Sizing agents may be applied to the surface of the paper to achieve surface sizing, or may be incorporated into the bulk of the paper by intermixing the sizing agent with the aqueous cellulosic pulp slurry during processing. Because cellulosic materials tend to be relatively hydrophilic, paper usually has relatively poor sizing in the absence of sizing agents. Typical sizing agents are relatively hydrophobic substances that are emulsified or dispersed into water, then intermixed with the pulp slurry, paper web or formed paper by a variety of known techniques to render the paper more hydrophobic and thus increase its resistance to permeation by liquids such as water. Alkenyl succinic anhydride (ASA) and alkyl ketene dimer (AKD) are widely used to size paper in commercial practice, but they are reactive substances that are generally put into the form of a suitable emulsion by a complicated on-site mixing process. Thus, there is a need for sizing agents that are easier to use and which exhibit commercially acceptable sizing performance.

In a number of cases paper has relatively poor dry strength in the absence of additives. In many applications, such as packaging, good dry strength is often desirable. Water-soluble polymers such as polyacrylamide are widely used in commercial practice to provide increased dry strength. These polymers may be conveniently incorporated into paper by dissolving them in the aqueous processing medium, e.g., the pulp slurry. However, for many applications these polymers do not provide adequate wet strength because of their tendency to dissolve in water. Good wet strength is often desirable in many packaging applications. Thus, there is a need for polymer additives which provide suitable dry strength but which also provide acceptable wet strength.

Many of the polymer additives used commercially to provide wet strength are capable of forming bonds to the cellulosic material or are capable of forming a crosslinked or network structure that does not fully dissolve, thus providing so-called "permanent" wet strength. Examples of permanent wet strength resins typically used in commercial practice are polyamine epichlorohydrin, polyamide epichlorohydrin and polyamine-amide epichlorohydrin. But in some cases permanent wet strength is undesirable because the crosslinked nature of the resin renders the resulting paper more difficult to recycle. So-called "temporary" wet strength resins tend to be easier to recycle because they have a degree of wet strength that decays over time upon exposure to water. An example of a temporary wet strength resin is glyoxalated vinylamide. However, these resins may be unsuitable for applications in which permanent wet strength is desirable. Thus, there is a need for permanent wet strength resins which are compatible with recycling.

In the absence of additives, paper is generally a rather flexible material and thus has relatively poor stiffness or flexural strength, especially when wet or when exposed to cyclic humidity. The industry currently coats the paper with wax to make it more stiff. However, wax makes the paper much more difficult to recycle. The presence of wax tends to weaken the recycled paper and to reduce its coefficient of friction, leading to problems in converting and handling. Thus, there is a need for an additive and/or coating for paper that is capable of providing enhanced flexural strength, especially under wet conditions, and that is compatible with recycling.

The use of any particular additive may also be complicated by requirements imposed by the process. For instance, ASA-type sizing agents are generally considered to be compatible with alkaline sizing processes, whereas many other sizing agents are not. Also, secondary additives are frequently used to increase the performance of the additive having the primary effect; e.g., emulsifiers are often added to the sizing agent to facilitate production of the sizing emulsions. In addition, the industry generally prefers more environmentally compatible processes, e.g., to decrease the level of pollutants produced during the papermaking process and to increase the degree to which the resulting paper can be recycled. Finally, the demands of the consumer frequently change, e.g., in recent years the demand for paper compatible with inkjet printers has generally risen as those printers have become more widely available. Thus, there is a need for polymer additives which are generally compatible with existing processes and equipment and which are versatile enough to enable future compliance with the demands imposed by society and the consumer.

Hydroxy-phenoxyether polymers are known, see e.g. U.S. Patent Nos. 6,011,111; 5,834,078; 5,814,373; 5,464,924; and 5,275,853; see also PCT Application Nos. WO 99/48962; WO 99/12995; WO 98/29491; and WO 98/14498. However, these disclosures do not address the aforementioned problems.

U.S. Patent No. 5,834,078 discloses hydroxy-functionalized poly(amino ether) salts that are useful in barrier articles to protect oxygen-sensitive materials. PCT International Publication No. 99/48962 discloses polymer composites comprising hydroxy-phenoxyether polymers filled with inorganic fillers. Addition of the filler may enhance one or more physical properties of the polymers, and articles made of the composite may be used for a variety of purposes, including building and packaging materials, PCT International Publication No. 99/12995 discloses the production of stabilized dispersions of hydroxy-functional polymers which are useful for coatings that exhibit oxygen and carbon dioxide barrier properties.

### Summary of the Invention

The inventors have discovered that hydroxy-phenoxyether polymers may be used to provide the paper with various desirable properties, such as increased sizing and/or strength. This benefits the papermaker by providing a new category of polymers suitable for use in papermaking. The papermaker may use these polymers as an alternative to, or in conjunction with, existing papermaking additives. Manufacturers of paper-containing goods also benefit by gaining access to a new type of paper for incorporation into various manufactured articles. The consumer who purchases these products benefits when the paper provides improved properties that increase the consumer's enjoyment of the product, or when the paper provides suitable properties at an acceptable cost. Finally, all of humanity benefits when the manufacture of the paper is more efficient and less polluting, and when the paper-containing product is recyclable.

Preferred embodiments provide paper comprised of an amount of hydroxy-phenoxyether polymer that is effective to provide the paper with an increase in sizing or strength. In a more preferred embodiment, the hydroxy-phenoxyether polymer is a polyetheramine. In another more preferred embodiment, the increase in strength is an increase in wet tensile strength, dry tensile strength, wet flexural strength or dry flexural strength. In yet another more preferred embodiment, the increase in sizing is an increase in Cobb sizing, as manifested by a decrease in Cobb value. In yet another preferred embodiment, the paper is readily recyclable.

In another preferred embodiment, a process for making paper is provided, comprising providing a pulp slurry or paper web, providing a solution or dispersion comprised of a hydroxy-phenoxyether polymer, intermixing the solution or dispersion with the pulp slurry or paper web to form an admixture, and forming paper from the admixture, wherein the hydroxy-phenoxyether polymer is used in an amount that is effective to provide the paper with an increase in sizing or strength. In a more preferred embodiment, the pH of the admixture is adjusted, to precipitate a least a portion of the hydroxy-phenoxyether polymer and/or to be in the range of about 4 to about 7.

In still another preferred embodiment, a process for coating paper is provided, comprising providing a paper, providing a solution or dispersion comprised of a hydroxy-phenoxyether polymer, applying the solution or dispersion to at least a portion of the paper to form a wet paper, and drying the wet paper to form a coated paper. In a more preferred embodiment, this process further comprises forming a wet laminate by bringing the wet paper or the coated paper into contact with a solid material, a second solution or dispersion comprised of a hydroxy-phenoxyether polymer, or a mixture thereof, and drying the wet laminate to form a laminate.

In still another preferred embodiment, a laminate is provided, comprised of hydroxy-phenoxyether polymer, at least one layer comprised of paper, and at least one layer comprised of a second paper or a solid non-paper material.

In yet another preferred embodiment, a method of obtaining recycled hydroxy-phenoxyether polymers from paper comprising hydroxy-phenoxyether polymers is provided, comprising: providing a paper comprising a hydroxy-phenoxyether polymer; contacting the paper with an aqueous solution comprising 1-50% acid by weight to at least partially dissolve the hydroxy-phenoxyether polymer to form an acidic hydroxy-phenoxyether polymer solution; separating the acidic hydroxy-phenoxyether polymer solution from any solids present adding a base to the acidic hydroxy-phenoxyether polymer solution to form a hydroxy-phenoxyether polymer precipitate; and separating the hydroxy-phenoxyether polymer precipitate.

These and other embodiments are described in greater detail below.

### Brief Description of the Drawings

Figure 1 is a bar graph of the compressive strength of molded paper samples as a function of sample thickness and amount of hydroxy-phenoxyether polymer contained within the paper.
Figure 2 is a plot of the load vs. number of cycles for 3 molded paper samples containing various amounts of hydroxy-phenoxyether polymer.
Figure 3 shows a non-limiting example of a flow diagram that illustrates various aspects of a typical papermaking process.
Figure 4 shows a non-limiting schematic diagram that illustrates various aspects of a "puddle" size press.
Figure 5 shows a non-limiting schematic diagram that illustrates various aspects of a metering size press.
Figure 6 shows non-limiting schematic diagrams that illustrate various types of roll coaters.
Figure 7 shows non-limiting schematic diagrams that illustrate various aspects of blade and air knife coaters.
Figure 8 shows a non-limiting schematic diagram that illustrates various aspects of a simple short dwell coater.
Figure 9 is a flow diagram for a preferred paper recycling process.
Figure 10 is a flow diagram for a preferred paper recycling process.

### Detailed Description of the Preferred Embodiments

The preferred embodiments relate to paper comprised of a hydroxy-phenoxyether polymer and methods of making such paper. The term "paper," as used herein, is a broad term and is used in its ordinary sense to include, without limitation, all manner of processed or molded cellulosic materials and thus includes all types of paper products produced from a cellulosic pulp slurry, including without limitation intermediate paper fiber products, finished products such as thin sheets of paper used for documents, books, newspapers, magazines and the like and heavier grades of paper such as cardboard, multi-ply paper, paper laminates, coated paper, corrugated paper, molded paper, and paper used for packaging, shipping containers and the like, without limitation. The term "pulp slurry," as used herein, is a broad term and is used in its ordinary sense to include, without limitation, an aqueous slurry containing cellulose or cellulosic fiber derived from a plant or wood pulping process or paper recycling process, regardless of whether such cellulose is derived from plants such as cotton or from hardwood or softwood or combinations thereof, and regardless of whether the pulping process(es) employed to provide such slurry is categorized as a mechanical or chemical or secondary or hybrid pulping process, or whether the slurry is derived from a plurality of types of pulping processes, and regardless of whether or not the pulp, or part of the pulp, has been bleached.

The term "hydroxy-phenoxyether polymer," as used herein, is a broad term and is used in its ordinary sense to include, without limitation, a polymer having aromatic ether moieties in its backbone chain and pendant hydroxyl groups, see e.g. U.S. Patent No. 6,011,111. Preferred hydroxy-phenoxyether polymers are as follows:
(1) hydroxy-functional poly(amide ethers) having repeating units represented by any one of the Formulae la, Ib or Ic: 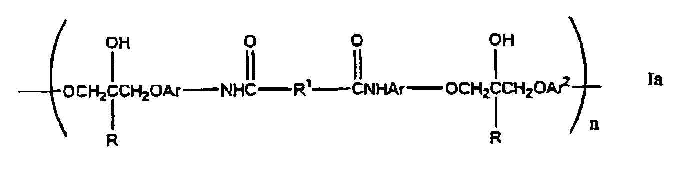 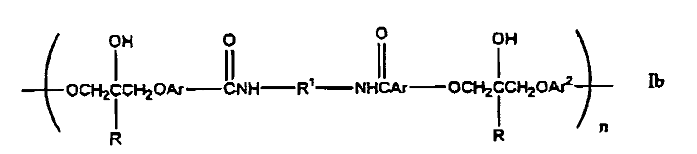 or 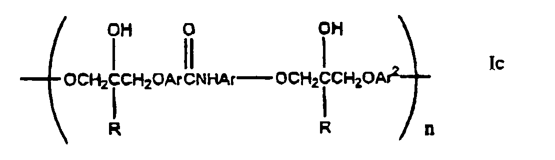
(2) poly(hydroxy amide ethers) having repeating units represented independently by any one of the Formulae IIa, IIb or IIc: 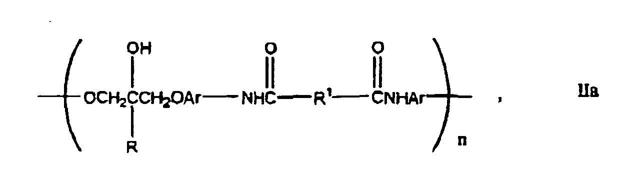 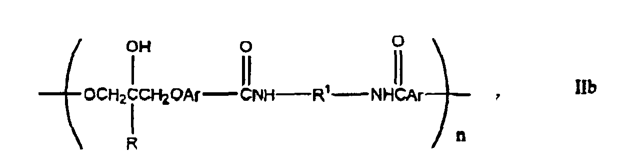 or 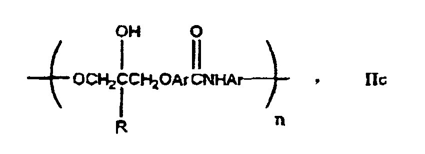
(3) amide- and hydroxymethyl-functionalized polyethers having repeating units represented by Formula III: 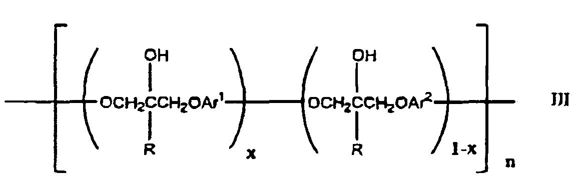
(4) hydroxy-functonal polyethers having repeating units represented by Formula IV: 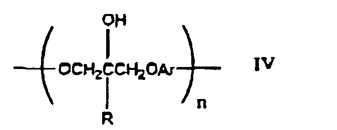
(5) hydroxy-functional poly(ether sulfonamides) having repeating units represented by Formulae Va or Vb: 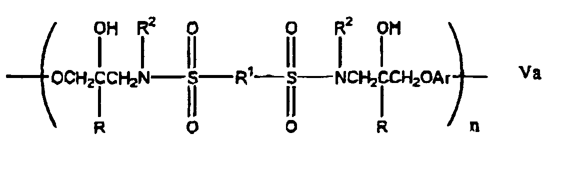 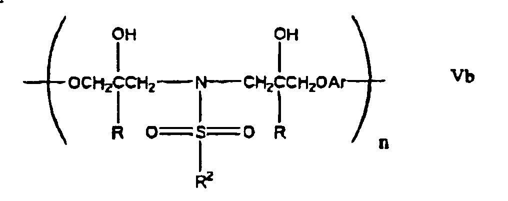
(6) poly(hydroxy ester ethers) having repeating units represented by Formula VI: 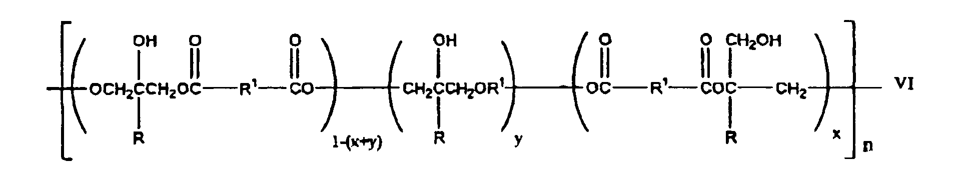
(7) hydroxy-phenoxyether polymers having repeating units represented by Formula VII: 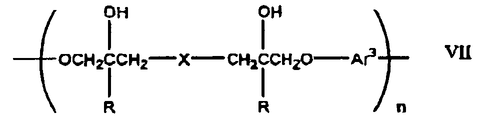 and
(8) poly(hydroxyamino ethers) having repeating units represented by Formula VIII: 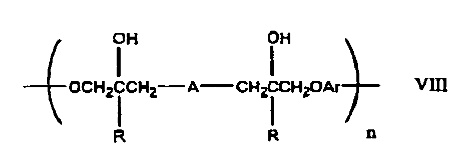
wherein each Ar individually represents a divalent aromatic moiety, substituted divalent aromatic moiety or heteroaromatic moiety, or a combination of different divalent aromatic moieties, substituted aromatic moieties or heteroaromatic moieties; R is individually hydrogen or a monovalent hydrocarbyl moiety; each Ar₁ is a divalent aromatic moiety or combination of divalent aromatic moieties bearing amide or hydroxymethyl groups; each Ar₂ is the same or different than Ar and is individually a divalent aromatic moiety, substituted aromatic moiety or heteroaromatic moiety or a combination of different divalent aromatic moieties, substituted aromatic moieties or heteroaromatic moieties; R₁ is individually a predominantly hydrocarbylene moiety, such as a divalent aromatic moiety, substituted divalent aromatic moiety, divalent heteroaromatic moiety, divalent alkylene moiety, divalent substituted alkylene moiety or divalent heteroalkylene moiety or a combination of such moieties; R₂ is individually a monovalent hydrocarbyl moiety; A is an amine moiety or a combination of different amine moieties; X is an amine, an arylenedioxy, an arylenedisulfonamido or an arylenedicarboxy moiety or combination of such moieties; and Ar₃ is a "cardo" moiety represented by any one of the Formulae: 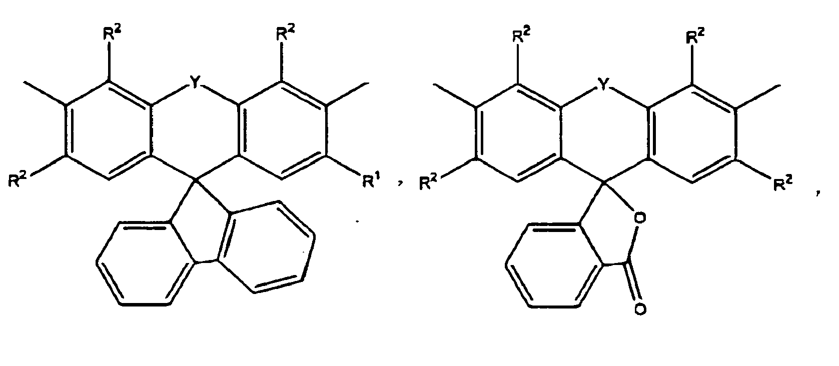 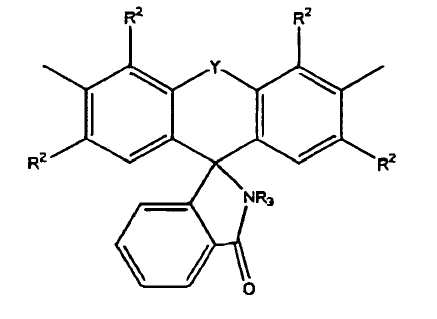 wherein Y is nil, a covalent bond, or a linking group, wherein suitable linking groups include, for example, an oxygen atom, a sulfur atom, a carbonyl atom, a sulfonyl group, or a methylene group or similar linkage; R¹ and R² are independently hydrogen, halogen, a hydrocarbyl or substituted hydrocarbyl, wherein hydrocarbyl is a monovalent hydrocarbon such as alkyl, cycloalkyl, aralkyl, or aryl and the substituent(s) is a monovalent moiety which is inert in the reactions used to prepare the polymer, and R₃ is hydrogen, a hydrocarbyl or substituted hydrocarbyl wherein hydrocarbyl is as defined previously and the substituent(s) is also as defined previously. Examples of such substituents include hydroxy, cyano and halo moieties. Preferably, n is an integer from about 10 to about 1000; x is 0.01 to 1.0; and y is 0 to 0.5.

The term "predominantly hydrocarbylene," as used herein, means a divalent radical that is predominantly hydrocarbon, but which optionally contains a small quantity of a heteroatomic moiety such as oxygen, sulfur, imino, sulfonyl, sulfoxyl, and the like.

The hydroxy-functional poly(amide ethers) represented by Formula I may be prepared by contacting an N,N'-bis(hydroxyphenylamido)alkane or arene with a diglycidyl ether as described in U.S. Patent Nos. 5,089,588 and 5,143,998.

The poly(hydroxy amide ethers) represented by Formula II may be prepared by contacting a bis(hydroxyphenylamido)alkane or arene, or a combination of 2 or more of these compounds, such as N,N'-bis(3-hydroxyphenyl) adipamide or N,N'-bis(3-hydroxyphenyl)glutaramide, with an epihalohydrin as described in U.S. Patent No, 5,134,218.

The amide- and hydroxymethyl-functionalized polyethers represented by Formula III can be prepared, for example, by reacting the diglycidyl ethers, such as the diglycidyl ether of bisphenol A, with a dihydric phenol having pendant amido, N-substituted amido and/or hydroxyalkyl moieties, such as 2,2-bis(4-hydroxyphenyl)acetamide and 3,5-dihydroxybenzamide. These polyethers and their preparation are described in U.S. Patent Nos. 5,115,075 and 5,218,075.

The hydroxy-functional polyethers represented by Formula IV can be prepared, for example, by allowing a diglycidyl ether or combination of diglycidyl ethers to react with a dihydric phenol or a combination of dihydric phenols using the process described in U.S. Patent No. 5,164,472. Alternatively, the hydroxy-functional polyethers may be obtained by allowing a dihydric phenol or combination of dihydric phenols to react with an epihalohydrin by the process described by Reinking, Bamabeo and Hale in the Journal of Applied Polymer Science, Vol. 7, p. 2135 (1963).

The hydroxy-functional poly(ether sulfonamides) represented by Formula V may be prepared, for example, by polymerizing an N,N'-dialkyl or N,N'-diaryldisulfonamide with a diglycidyl ether as described in U.S. Patent No. 5,149,768.

The poly(hydroxy ester ethers) represented by Formula VI may be prepared by reacting diglycidyl ethers of aliphatic or aromatic diacids, such as diglycidyl terephthalate, or diglycidyl ethers of dihydric phenols with, aliphatic or aromatic diacids such as adipic acid or isophthalic acid. These polyesters are described in U.S. Patent No. 5,171,820.

The hydroxy-phenoxyether polymers represented by Formula VII may be prepared, for example, by contacting at least one dinucleophilic monomer with at least one diglycidyl ether of a cardo bisphenol, such as 9,9-bis(4-hydroxyphenyl)fluorene, phenolphthalein, or phenolphthalimidine or a substituted cardo bisphenol, such as a substituted bis(hydroxyphenyl)fluorene, a substituted phenolphthalein or a substituted phenolphthalimidine under conditions sufficient to cause the nucleophilic moieties of the dinucleophilic monomer to react with epoxy moieties to form a polymer backbone containing pendant hydroxy moieties and ether, imino, amino, sulfonamido or ester linkages. These hydroxy-phenoxyether polymers are described in U.S. Patent No. 5,814,373.

The poly(hydroxyamino ethers) ("PHAE" or polyetheramines) represented by Formula VIII may be prepared by contacting one or more of the diglycidyl ethers of a dihydric phenol with an amine having two amine hydrogens under conditions sufficient to cause the amine moieties to react with epoxy moieties to form a polymer backbone having amine linkages, ether linkages and pendant hydroxyl moieties. Examples of polymers of this type are described in U.S. Patent No. 5,275,853.

Thermoplastic phenoxy materials suitable for use in the preferred embodiments include those commercially available from Phenoxy Associates, Inc. These hydroxy-phenoxyether polymers are preferably the condensation reaction products of a dihydric polynuclear phenol, such as bisphenol A, and an epihalohydrin and have the repeating units represented by Formula IV wherein Ar is an isopropylidene diphenylene moiety. A process for preparing these polymers is described in U.S. Patent No. 3,305,528.

Phenoxy-type thermoplastics of Formulae I-VIII may be obtained commercially from Dow Chemical Company (Midland, Michigan U.S.A.). The most preferred hydroxy-phenoxyether polymers are the poly(hydroxyamino ethers) ("PHAE" or polyetheramines) represented by Formula VIII, such as XU19040.00L or BLOX 0005 available from The Dow Chemical Company.

The amount of hydroxy-phenoxyether polymer in the paper of the preferred embodiments is generally selected to be effective to provide the paper with a desirable property such as increased sizing and/or strength. Preferred amounts of hydroxy-phenoxyether polymer in the paper may be in the range of from about 0.01% to about 50%, more preferably about 0.1% to about 25%, even more preferably about 0.5% to about 20%, most preferably about 1% to about 10%, by weight based on total paper weight, depending on the particular application and the degree of sizing, strength or other property desired.

The hydroxy-phenoxyether polymer used in the methods and materials described herein may comprise virgin material, recycled or post-consumer material, or some combination of the two. It has been found that use of recycled hydroxy-phenoxyether polymer in the materials, products, and methods described below results in a minor reduction of the advantageous properties which result from inclusion of the hydroxy-phenoxyether polymer, if any reduction occurs at all. As such, it is intended that hydroxy-phenoxyether polymer comprising some or all recycled polymer optionally be used in any of the methods described below, whether or not there is specific mention of the option of its use in any given example or description.

The term "sizing," as used herein, is a broad term and is used in its ordinary sense to include, without limitation, resistance to penetration by a liquid. The liquid in question may be aqueous or organic in nature. For a particular liquid, sizing may be assessed qualitatively by observing the extent and rate at which a drop of liquid spreads through the paper after being placed on the surface of the paper, by e.g., measuring the rate of spreading as a function of time. Various types of water, grease and aqueous liquids may be used to assess sizing, depending on the intended application for the paper. For instance, in a packaging application involving a greasy or oily food, the use of the grease or oil in question may be appropriate, whereas orange juice, milk or water may be more appropriate test fluids in situations where resistance to those liquids is desirable. In other situations a more quantitative measure, such as a measurement of Cobb sizing, is appropriate. The Cobb test evaluates sizing in terms of the amount of liquid absorbed by the paper over a defined interval of time and is typically reported as the weight of liquid absorbed in units of grams of liquid per square meter of paper. It is a well-defined method known to those skilled in the art, see e.g. TAPPI T 441 om-90 (1990). The lower the Cobb value, the better the sizing, and a decrease in Cobb value represents an increase in sizing.

Quantitative sizing tests also exist for oil and grease resistance. For oil, these include the 3M Kit Test, which is identical to TAPPI Useful Method 557. It consists of testing the paper with droplets of increasingly aggressive mixtures of castor oil, toluene, and heptane to determine resistance to staining. Higher Kit numbers indicate better oil and grease resistance. For grease, these include TAPPI Test Method T 454 om-89 (turpentine test for grease resistance of paper). This test consists of exposing the sheet surface to sand saturated with colored turpentine for various periods of time. Longer periods of exposure without staining indicates better grease resistance. Preferred papers contain hydroxy-phenoxyether polymer in an amount that is effective to provide the paper with improved resistance to water, oil and/or grease, as compared to a comparable paper.

When assessing water resistance, a preferred paper has an increase in sizing that is manifested as a decrease in Cobb value of about 5% or more, as compared to a comparable paper. When assessing oil resistance, a preferred paper has in increase in sizing that is manifested as an increase in the Kit value of about one or more, as compared to a comparable paper. When assessing grease resistance, a preferred paper has in increase in sizing that is manifested as an increase in the turpentine test value of about 5% or more, as compared to a comparable paper. As used herein, a "comparable paper" does not contain a hydroxy-phenoxyether polymer, but is in all other meaningful respects substantially identical to the paper containing the hydroxy-phenoxyether polymer that is the subject of the test. For instance, if a comparable paper has a Cobb value of 100 g/m², then a paper having an increase in sizing that is manifested as a decrease in Cobb value of about 5% or more has a Cobb value that is (100 - (100 x 0.05)) = 95 g/m² or less. Preferably, the paper has a Cobb value of 100 g/m² or less, more preferably 40 g/m² or less.

Other tests may be used to assess sizing. For instance, those skilled in the art are aware of the well known Hercules Sizing Test (HST), which is TAPPI Test Method T530 pm-89 Size test for paper by ink resistance (Hercules method), and will select the test that is most appropriate in accordance with principles understood by those of skill in the art.

Hydroxy-phenoxyether polymer may be incorporated into paper try the various methods described herein to provide that paper with an increase in strength. The term "strength," as used herein, is a broad term and is used in its ordinary sense to mean, without limitation, resistance to rupture or deformation under an applied load. It may include one or more of the following and may be measured dry or wet tensile strength, compressive strength, tear resistance, burst strength, stiffness (flexural modulus, also referred to herein as flexural strength), tensile energy absorption, (TEA), surface strength, abrasion resistance, folding resistance, and ply bond strength. Preferably, the paper has an increased dry tensile strength and/or an increased wet tensile strength of about 5% or more, more preferably 10% or more. Preferably, the paper has an increased flexural strength (or modulus) and/or an increased wet flexural strength (or modulus) of about 5% or more, more preferably 10% or more. In a particularly preferred embodiment, corrugated paper has an increased wet flexural strength of about 5% or more, more preferably 10% or more. This increase in the wet flexural strength of corrugated paper may be accomplished by incorporating hydroxy-phenoxyether polymer into the linerboard and/or fluting paper from which the corrugated paper is made. The magnitude of an increase in strength may be determined by comparison to a comparable paper as defined above, using test methods well known to those skilled in the art.

Hydroxy-phenoxyether polymer may also be used to improve the productivity of the papermaking process. Preferably, the hydroxy-phenoxyether polymer is incorporated into a wet paper web in an amount effective to increase wet web strength. Most preferably, this increase in wet web strength results in decreased line breaks on the wet end of the machine, leading to increased paper mill productivity.

For foods such as baked goods, it is often preferable for the packaging to have a certain degree of "breathability" or permeability in order to allow the moisture content to change in an amount that is effective to preserve freshness and crispness. However, staleness of the baked goods may result if the packaging is overly permeable. The inventors have found that the permeability of the paper or paperboard may be adjusted by controlling the amount of hydroxy-phenoxyether polymer incorporated therein. Relative to comparable paper as defined above, the paper preferably exhibits lower permeability to gases such as oxygen, nitrogen, carbon dioxide, and/or water vapor. Most preferably, the amount of hydroxy-phenoxyether polymer in the paper is effective to allow the desired degree of gas permeability, depending on the particular application. For instance, for some food packaging and non-food application such as ream and roll wrap, relatively high levels of resistance to moisture (water vapor) and oxygen transmission are frequency preferred, and may be obtained by incorporating hydroxy-phenoxyether polymer. Water vapor permeability may be measured by TAPPI Test Method T 523 om-93 Dynamic measurement of water vapor transfer through sheet materials. Results are typically reported in units of grams per square meter per day (gsm/day). Preferred values tend to depend on the application, e.g., about 15 gsm or less for bakery boxes, about 10 gsm or less for ream paper, and about 5 gsm or less for detergent boxes. Permeability of oxygen may be measured by a Mocon instrument in units of cubic centimeters per square meter per day (cm³/m²/day). Preferred values tend to depend on the application, e.g., about 250 cm³/m²/day or less for keep fresh boxes, about 200 cm³/m²/day or less for bag paper, and about 100 cm³/m²/day or less for barrier paper.

The paper described herein may be shaped, processed or incorporated into semi-finished or finished manufactured items such as writing paper, drawing paper, paper towels, tissues, containers (e.g., paper bags, paper boxes, cardboard boxes, mailing tubes, file folders), photo paper, glossy paper, cardboard, corrugated cardboard, disposable diapers, adhesive labels, honeycomb structures (e.g., cellular structures having open or closed cells of one or more shapes, including without limitation hexagonal, polygonal, and/or rounded shapes), sandpaper, and packaging material, by processes and methods generally known to those skilled in the art.

In a preferred embodiment, a process for making paper is provided. A preferred process involves making paper by using an amount of a hydroxy-phenoxyether polymer that is effective to provide the paper with an increase in sizing or strength. The hydroxy-phenoxyether polymer may be incorporated into the paper at any convenient point or points during the process of making the paper or by treating or coating the formed paper.

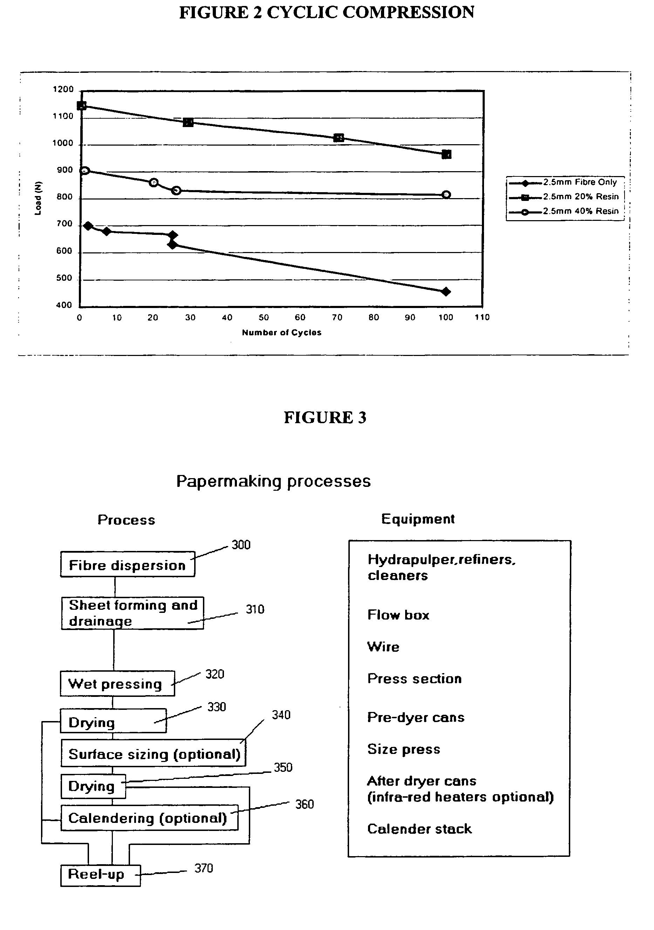

An illustrative, non-limiting example of a flow diagram for a typical papermaking process in shown Figure 3. Figure 3 also identifies typical equipment used at the various states of the process. In such a process, bales of dry wood pulp or waste paper may be pulped in a hydrapulper to form a pulp slurry (fiber dispersion **300**) with a consistency in the range of about 2 to about 30% depending on the pulper and the manufacturing process. The pulp may then be refined to enhance the strength and bonding properties of the cellulosic material. Refining may be carried out at a range of consistencies depending on the refiners used and therefore may involve dilution of the pulp slurry. After refining, the pulp slurry is usually screened and cleaned to remove impurities, then passed to blending tanks where chemical additions are made. This is one point where the hydroxy-phenoxyether polymer may be intermixed with the pulp slurry.

Typically, the next stage of papermaking is the sheet forming and draining process **310**. The sheet forming process suitably consists of seven distinct sections: Headbox (or flowbox), wire section, press section, dryer section, size press, calendar and reel up. The headbox is a collecting box for dilute pulp slurry. A narrow aperture running across the width of the box allows the pulp slurry to flow onto the wire with the cellulosic material being distributed evenly over the width of the paper machine. The wire is often a woven plastic mesh conveyer belt and as the pulp slurry flows from the flow box onto the wire the water drains away initially by gravity and then aided by suction to leave a paper web on the wire. This is one point where the hydroxy-phenoxyether polymer solution or dispersion could be intermixed with the paper web, e.g., by spraying onto the web. The amount of the polymer entrained in the web usually depends on the temperature and moisture content of the web, the solids content and viscosity of the polymer solution or dispersion, the speed of the machine and the pressure of the rolls at the press section.

In the press section **320,** the paper web, typically supported on a felt, passes through a series of rollers, which tend to consolidate the web and remove more water. The web then passes to the dryer section **330,** which consists of a large number of heated 'cans' or cylinders to evaporate the remaining water. Surface sizing **340** can be conducted with a size press, which may be located part way down the drying section, is another point where the hydroxy-phenoxyether polymer solution or dispersion may be intermixed with the wet paper or paper web. After the drying section **350,** on many machines there is a calender stack **360.** Here a series of polished rollers consolidate and polish or glaze the surface of the paper giving a smoother finish. Calendar sizing may also be used to size the paper with the hydroxy-phenoxyether polymer. Finally, the finished paper is reeled up **370** for transport to further processing or for slitting down into smaller reels or individual sheets.

The papermaking process also offers the potential for the application of the hydroxy-phenoxyether polymer to single ply or multi-ply paper. Multi-ply paper may be produced with the polymer laminated between the plies or, as in the case of single plies, with the polymer contained throughout the whole paper sheet. Multi-ply paper and board offers good product versatility especially with the application of hydroxy-phenoxyether polymer. Paper/board can be produced with the plies made from the same pulp slurry and with the same basis weight, or the plies can be from different pulp slurries and/or have different basis weights. Multi-ply sheets are generally made in a similar manner to single ply sheets, but each ply tends to have its own headbox and wire section with the two or more plies meeting in the press section for consolidation and bonding. Intermixing hydroxy-phenoxyether polymer may enhance this bonding, e.g., providing increased ply bond strength, and may increase the strength and resilience properties of the paper or paperboard.

The term "molding," as used herein, is a broad term and is used in its usual sense to include, without limitation, various processes for shaping paper or concentrated pulp slurries to form desired shapes such as sheets or three-dimensional objects. The products resulting from these processes may be referred to herein as being "molded" products. For instance, pulp molding may be used to make the paper of the preferred embodiments. As an example of pulp molding, also known as dip molding, a wire mold is formed into the shape of the object in question, e.g., an egg carton. The mold unit is attached to a vacuum source with an intermediate separator or trap, such that when the mold is dipped into a pulp slurry, water is drawn through the wire and deposits a paper web on the surface of the wire in the shape of the object When sufficient thickness of cellulosic material is built up on or in the mold, the mold is withdrawn from the pulp slurry and air may then be drawn through the wet web to partially dry it. The formed shape is then transferred to a support and dried by e.g., passage through an oven, infrared drying unit or similar drying system to produce the final article. In some instances, e.g., the production of smooth, glazed containers, the wet article may be inserted into a polished die and expanded against the heated walls of the die by an inflatable rubber bladder. The bladder may then be deflated and the shape removed from the die for final drying.

The hydroxy-phenoxyether polymer may be added to the pulp slurry before molding, in the same manner as it may be added to the pulp slurry before forming on a paper machine. Alternatively, it may be added by impregnation of the dried article by dipping the article into a polymer solution or dispersion with or without the application of pressure or vacuum to the article to force the polymer into the interior of the cellulosic mass. The article may then be dried in the usual manner to give a product with superior properties, e.g. improved water and oil resistance, improved toughness, and improved compressive and tensile strength.

In preferred embodiments, the hydroxy-phenoxyether polymer is incorporated into the paper by intermixing with: the pulp slurry, the paper web or wet paper sheet on the paper or paperboard machine, formed paper plies to form multi-ply paperboard or paper laminate, the paper or paper web by surface addition at the size press, paper or board by on-machine surface coating or off-line in another process, etc. The term "intermixing," as used herein, is a broad term that that is used in its ordinary sense to include, without limitation, all manner of applying, mixing, coating and/or spraying the hydroxy-phenoxyether polymer (or mixture containing the polymer) with or onto cellulosic material to form an admixture that comprises the polymer and the cellulosic material. Thus, the resulting admixture may but need not be a heterogeneous or homogeneous physical mixture of cellulosic material and hydroxy-phenoxyether polymer. The admixture may be in the nature of a layer or coating of hydroxy-phenoxyether polymer on the cellulosic material. The term "cellulosic material," as used herein, is a broad term that is used in its ordinary sense to include, without limitation, all manner of cellulose-containing compositions, including pulp slurry, the paper web that is formed during the papermaking process, the concentrated pulp slurry used in the pulp molding process, wet paper, and dry paper.

In a preferred embodiment, paper is made by a process comprising providing a pulp slurry or paper web, providing a solution or dispersion comprised of a hydroxy-phenoxyether polymer, intermixing the solution or dispersion with the pulp slurry or paper web to form an admixture, and forming paper from the admixture, wherein the hydroxy-phenoxyether polymer is used in an amount that is effective to provide the paper with an increase in sizing or strength. For sizing, preferred amounts of polymer may be in the range of from about 0.01% to about 10%, more preferably about 0.1% to about 5%, by weight based on total weight of paper. For strength, preferred amounts of polymer may be in the range of from about 0.1% to about 50%, more preferably 1% to about 30%, by weight based on total weight of paper. In more preferred embodiments, the hydroxy-phenoxyether polymer is intermixed with the cellulosic material by forming a solution or dispersion comprised of the polymer, and adding it to the pulp slurry, paper web, or formed paper by preferred techniques such as by mechanical mixing with the aqueous pulp slurry (with or without pH adjustment) and/or spraying or coating the paper web or formed paper.

The hydroxy-phenoxyether polymer may also be applied in a foam coating process. For example, a foam comprised of hydroxy-phenoxyether polymer may be 'sandwiched' between two or more paper layers to produce a laminated structure. Impregnation of a pre-dried sheet makes more efficient use of the natural bonding properties of the cellulosic material and permits some control of the distribution of polymer through the thickness of the sheet. This may be done either at the size-press or as an off-line process.

Preferred hydroxy-phenoxyether polymers are soluble in aqueous acid and such polymer solutions may be intermixed with the cellulosic material. An example of a preferred polymer is polyetheramine. A most preferred polymer is available from Dow Chemical under the tradename BLOX®. A polymer solution may be prepared by stirring or otherwise agitating the hydroxy-phenoxyether polymer in a solution of water with acid, preferably acetic or phosphoric acid. The resulting polymer solution may be intermixed with cellulosic material to form an admixture. The admixture may then be processed in the usual manner to eventually remove the excess water and form the paper. In a preferred embodiment, the acid concentration in the polymer solution is preferably in the range of about 5% - 20%, more preferably about 5% - 10%, by weight based on total weight. In other preferred embodiments, the acid concentration may be below about 5% or above about 20%, depending on the type of polymer and its molecular weight. The amount of dissolved polymer in a preferred embodiment is about 0.1% to about 40%. A uniform and free-flowing polymer solution is preferred for application at the wet end. Most preferably, a 10% polymer solution is prepared by dissolving the polymer in a 10% acetic acid solution at 90°C and while still hot the solution diluted with 20% distilled water to give an 8% polymer solution. At higher concentrations of polymer, the polymer solution tends to be more viscous.

A polymer solution may be optionally neutralized by the addition of a base before or after intermixing with cellulosic material to precipitate the polymer, forming a polymer dispersion. A polymer dispersion may also be formed by intermixing small particles of polymer with a liquid, preferably an aqueous liquid and preferably by high shear mixing techniques known to those skilled in the art. Depending upon the specifics of the method used to form the paper, it may be desirable for the polymer solution or dispersion to have certain qualities such as a particular degree of dissolution/precipitation, larger or smaller precipitate particle size, or a pH in a certain range. These properties can, in part, be controlled by the degree of neutralization, the manner in which neutralization is carried out, and the place in the process in which neutralization is carried out.

Neutralization is preferably performed by the addition of a strong base (alkaline) material such as caustic soda (sodium hydroxide), or potassium hydroxide to the medium containing the polymer. The degree of neutralization may be used to control the degree of precipitation of the polymer from the solution, with the amount of precipitation increasing as more alkali is used. If sufficient alkali is added, the solution eventually becomes a dispersion of polymer particles in the solution. The solution or admixture need not be fully neutralized prior to processing; it can be partially neutralized. A higher degree of precipitation may be desirable in some embodiments, as there may be a greater degree of adhesion between polymer and the cellulosic materials when the polymer molecules have aggregated to the point of no longer being dissolved. Thus, in preferred embodiments, the process of making paper comprises adjusting the pH of the admixture to precipitate a least a portion of the hydroxy-phenoxyether polymer, most preferably in the presence of the cellulosic material prior to forming a web. Most preferably, the process comprises adjusting the pH of the admixture to be in the range of about 4 to about 7.

The manner in which neutralization is carried out may also affect the result. If the alkali used for neutralization is added slowly, the dispersion which forms tends to be fairly uniform and of a moderate to small particle size. On the other hand, if all of the alkali is added quickly, the dispersion which forms tends to have a greater variety of particle sizes as well as having many more larger size particles as compared to the slowly neutralized material. Therefore, the speed of alkali addition may be used to promote a particular particle size or particle size distribution. Preferably, the dispersion has a number average particle size of about 500 micrometer or less, more preferably 100 micrometer or less, most preferably 10 microns or less.

Precipitation/neutralization may take place prior to intermixing the polymer solution/dispersion with the cellulosic material, or it may be done while the polymer is in contact with the cellulosic material. Also, it may be desired to perform the neutralization at a particular point in the process for reasons including, but not limited to, the minimization or maximization of the length of time that a particular process takes, the optimization of the viscosity of the medium at one or more places in the process, or to prevent certain equipment from becoming exposed to material that falls above or below a particular pH. Materials having a high or low pH may etch, dissolve, or otherwise harm or degrade certain equipment or materials used in the papermaking process. Dispersions tend not to be as free-flowing as polymer solutions, and this difference may be more notable if the cellulosic material is already in contact with the polymer.

Preferably, the polymer is added at either the pulp slurry preparation stage or at the web forming stage. At the pulp slurry preparation stage, the polymer and base (preferably potassium or sodium hydroxide) may be added together, whereas at the wet sheet forming stage, the polymer is preferably added after the base. The most preferred point of polymer addition depends on the viscosity of the polymer solution, its retention and bonding potential at different pulp consistencies (the consistency at the pulp slurry preparation stage tends to be higher than at the web forming stage) and the paper machine's operating procedure.

Maximum retention of the polymer on the cellulosic material is usually preferred to minimize loss of polymer. Retention is preferably maximized at the isoelectric point and decreases as the pH is lowered. Although retention may be poorer at low pH values, both wet and dry strength tend to be high. As pH is increased strength tends to decrease owing to aggregate formation and then tends to increase again as polymer retention increases. Preferably, the polymer particles and the cellulosic material are oppositely charged in order to achieve good retention. A cationic or amphoteric adjuvant may be added to assist precipitation of the polymer onto the surface of the cellulosic material and by adjusting the pH to the electrokinetic point at which the polymer is preferably deposited. Examples of such adjuvants include alum, sodium aluminates, zirconium salts, polyamines, poly(diallyldimethylammonium chloride) (polyDADMAC), poly(ethyleneimine) (PEI), diamine- and dicyanoamide polymers, polyacrylamide copolymers, cationic starches, polyamide-epichlorohydrin resins, and aminoplast resins.

The paper may be formed by intermixing a solution or dispersion of polymer with a paper web or formed paper. Various methods are known in the art For example, a polymer solution or dispersion may be sprayed onto one or more sides of the web or paper. Other methods include: applying a coating of dispersion or solution on one or more sides using a blade coater; coating or impregnating by placing the dispersion or solution onto one or more sides of the paper or web and allowing gravity, pressure, or vacuum to draw the paper to the polymer; and use of size pressing technology, such as is known in the art, to coat a paper or web with a dispersion or solution of polymer. As discussed above, the application of the solution or dispersion may be done with or without neutralization, and if neutralization is employed, as is presently preferred, it may be partial or complete and may take place at any step in the process.

Beater or wet end addition methods are preferably employed that involve adding the polymer solution to the pulp slurry, preferably resulting in pH of about 4 to about 5, then adding an alkali, preferably NaOH, to bring the pH above 6 to precipitate the polymer onto the cellulosic material. The polymer, preferably polymer solution, may also be added to the dilute loop, preferably at the basis weight valve, along with alkali in the tray water, preferably NaOH, to control headbox pH to be in the range of about 6.0 to about 6.5.

In the wet-web saturation process, which may be used for addition of polymer to web in relatively high concentration (e.g., 35-50% of total weight), the process preferably involves three strategies: water removal by wet pressing; polymer saturation of the wet web by capillary and hydrostatic forces; and redistribution and removal of excess polymer.

Factors influencing the web consolidation and the percentage of polymer in web include the capacity of the web to absorb polymer, the rate of penetration of the polymer into the web, and wet pressing of the web to a level of dryness (preferably < 50%) before saturation with the polymer.

Additional components may also be added to the hydroxy-phenoxyether polymer solution or dispersion to enhance the packaging properties and/or appearance of the paper. Two categories of additives are preferred, process aids and product additives. Examples of process aids are as rheology modifiers or thickeners, calender lubricants, and biocides. Examples of product additives are optical brightening agents, crosslinking agents, plasticizers, dyes, fillers, anti-static agents, anti-slip or anti-tack agents and flame retardants. Other materials e.g., plastics, metals, wood, ceramic, minerals, glass, carbon, etc., in various forms, e.g., long fiber, short fiber, woven fiber, powder, etc., may be added to the polymer, and may add to or take the place of cellulosic materials. Process additives may be used to improve the efficiency of the coating operations, e.g., by controlling coatweight and uniformity or by preventing microbial attack. Product additives may be used to improve the performance of the product For example, crosslinking agents tend to increase the rigidity and water-resistance of the product. They include materials such as aminoplast, epihalohydrin or glyoxal resins and inorganics such as zirconium compounds. Plasticizers may include low T_{g} (glass transition temperature) acrylic or vinyl resins to improve flexural properties.

The order and manner of addition of the ingredients is preferably controlled to avoid gross precipitation of the hydroxy-phenoxyether polymer from solution or sudden increases in viscosity. A high-shear mixer is preferably used, but caution should preferably be exercised to avoid shearing the polymer to the extent that the viscosity and effectiveness of the coating are reduced. The additives should also be compatible with the acidic nature of the dispersion or solution.

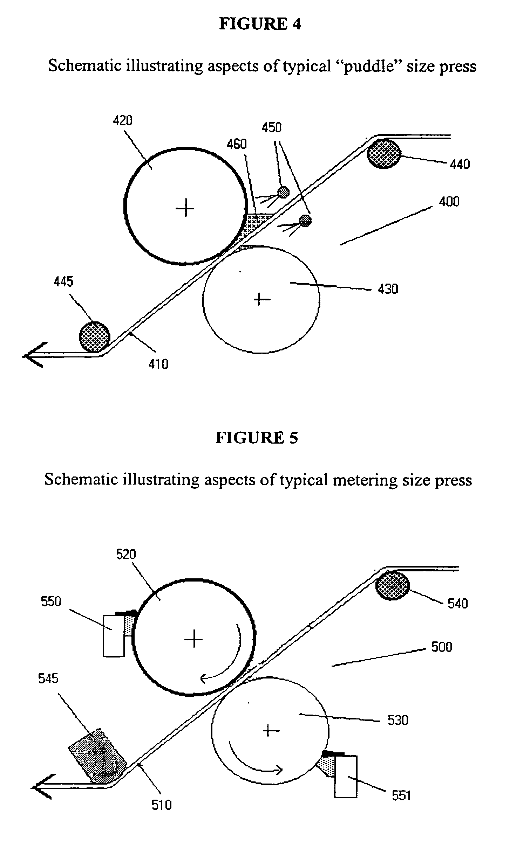

Both standard 'puddle' size presses and metering size presses may be used for intermixing. Puddle size press are preferably used on slower paper machines and tend to give strength improvements together with oil and grease resistance. A non-limiting schematic diagram illustrating various aspects of a typical "puddle" size press **400** is shown in Figure **4.** In such a puddle size press, a paper web **410** is fed between a rubber covered roll **420** and a hard roll **430,** by way of turn rolls **440** and **445,** and a sizing composition is supplied by sprays **450,** forming a puddle **460** between paper web **410** and rubber covered roll **420.**

Metering size presses tend to give less penetration, therefore less strength improvement but higher film forming and barrier performance. They are often used on larger, higher speed machines. A non-limiting schematic diagram illustrating various aspects of a typical metering size press **500** is shown in Figure 5. In such a metering size press, a paper web **510** is fed between a roll **520** and a roll **530,** by way of a turn roll **540** and an air turn **545,** and a sizing composition is applied to the hard roll **530** by coating head **550,** and also to rubber covered roll **520** by coating head **551,** which roll **530** and roll **520** in rotating supply the sizing to the paper web **510.** Roll **520** and roll **530** are preferably coated with an elastomer, with the elastomer on roll **520** being preferably softer than the elastomer on roll **530.** Size press treatment may be used to provide a single functional coat or a ground-coat for further coating applications later as in the production of base stock for silicone release papers. Platy clays or similar minerals may be incorporated in the polymer formulation to improve cost-effectiveness of the coating.

Paper strength is often influenced by the bonding between the cellulosic material and the polymer. Factors which influence the adhesion or adhesive bonding between the cellulosic material and polymer include: wetting of the surfaces; solidification (to provide resistance to shear); deformability (to reduce stress concentration); intimate contact between surfaces (such as is preferred for chemical bonding); diffusion of macromolecules of bonding materials within the adhesive zone; temperature (adhesion increases near T_{g}, and lowering T_{g}'s by e.g., adding water, may increase adhesion within the composite). Adhesion may also be influenced by the capability of the polymer molecules to penetrate into the cracks and pores of the cellulosic material. The effective diameter of the polymer may also affect its penetration ability.

Adhesion or bonding may be improved by improving the surface reactivity of the cellulosic material. Preferably, this may be done by chemical or electrochemical means. For example, one may increase the ionic character of the cellulosic material. Ionic bonding with the cellulosic material may be helpful because ionic bonds are rapidly formed in aqueous systems and need no further curing, and compounds capable of forming ionic bonds are often soluble in water, the preferred solvent for the solutions and dispersions herein. Furthermore, ionic bonds are usually reversible, and these electrostatic attractions can take place over a greater distance than covalent bonds. Reactive products known in the art may be used to create anionic sites on the cellulosic materiel. Cationic polyacrylamide, polyethylene amine, cationic starch, cationic guar (galactomannan) gum, and chitosan (from sea shells) are examples of preferred products used to enhance paper strength, and may function by increasing bonding.

Additionally, other methods may be used such as treatment with wetting agents, surfactants, and acids or bases. Polymers having good wetting capability towards the cellulosic material can, during the drying process, enhance strength as the polymer comes into closer contact with the cellulosic material. Other factors that may influence bonding are the particle size, viscosity, stabilizer level, and presence of functional groups like carboxyl groups within the polymer or on the surface of the cellulosic material. Surfactants may improve bonding by helping to reduce surface tension or increase the hydrophobicity of the cellulosic material. This in turn allows the building of a bulkier web at a given level of water. POLYWET^{™} surfactants, available commercially from Peach State Labs, Inc., Rome, Georgia, USA, may be used to improve stability and adhesion.

When the processes described herein are used on formed paper, a coated paper may result. Thus, a process for coating paper is also provided, comprising providing a paper, providing a solution or dispersion comprised of a hydroxy-phenoxyether polymer, applying the solution or dispersion to at least a portion of the paper to form a wet paper, and drying the wet paper to form a coated paper. The solution or dispersion may be applied using any convenient technique described herein for intermixing a polymer with a paper web or formed paper. Drying may be accomplished by simple evaporative techniques, or may be encouraged by known methods such as by heating the wet paper. Preferably, for processes described herein that involve drying, the drying temperature is near the melting or glass transition temperature of the hydroxy-phenoxyether polymer. In preferred embodiments, the coated paper has a Cobb value of about 100 g/m² or less, preferably about 50 g/m² or less. Preferably, the coated paper is comprised of from about 0.1% to about 50%, more preferably about 1% to about 30%, even more preferably about 2% to about 20%, most preferably about 5% to about 15%, by weight based on total coated paper weight, of the hydroxy-phenoxyether polymer.

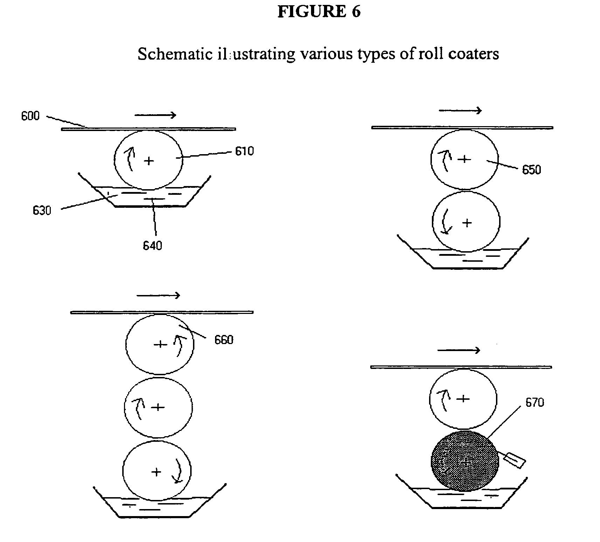

Paper may be coated using a variety of known methods, including: roll, reverse roll, gravure, dip saturation, fountain, blade, rod, and air knife. A non-limiting schematic illustrating various types of roll coaters is shown in Figure 6. The simplest form of roll coater has a paper 600 contacting a roll 610 dipping into the polymer dispersion or solution **630** contained in a pan **640.** This type of system is very sensitive to changes of speed and the level of the liquid in the pan. The addition of a transfer roll **650** tends to smooth out the liquid film on the lower roll and presents a more uniform coating to the paper. Changing the gap between the rollers controls the thickness of the liquid film transferred to the sheet. The liquid film may be sheared down further by using a reverse-roll applicator **660** in which the direction of rotation of the transfer roll is opposed to the direction of travel of the paper or board substrate. Coat weights between 5 and 20 g/m² per side are preferred.

For gravure coating the engraved cells on the surface of the gravure roll **670** pick up the solution or dispersion, with the excess being doctored off by a blade. This enables the gravure roll to apply a precise coating thickness regardless of variations in the substrate thickness typically laying down coat weights of between 0.5 and 8 g/m². The coating solution or dispersion is preferably of a fairly low viscosity.

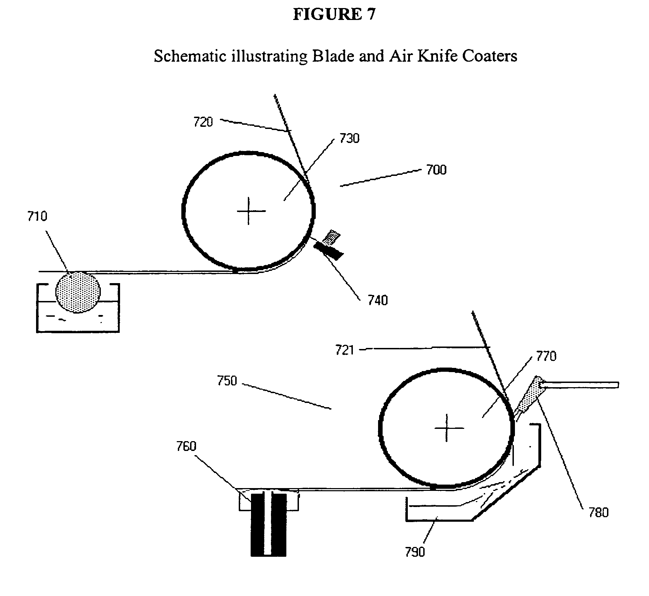

The paper is typically supported by a backing roll at the point of contact with the transfer roll. The transfer, reverse roll and gravure coaters usually pre-meter the polymer dispersion or solution before application. In the case of blade, air knife and rod coaters, the metering process usually takes place after application. A non-limiting schematic illustrating various aspects of blade coater **700** and air knife coater **750** is shown In Figure 7.

Air knife, blade and rod coaters may use either a roll coater **710** or a fountain applicator **760** to apply an initial layer of coating to the coated sheet **720** or **721,** then employ a separate metering method for control of coatweight. The fountain applicator **760** is a slit or channel through which the dispersion or solution is forced in order to ply upon and be picked up by the passing sheet surface.

In air knife coating the polymer dispersion or solution is applied in excess to the paper substrate **721,** then a backing roll **770** is used to carry the paper to an air curtain **780** which is used to remove the excess as well as level the coating on the sheet. The excess can be recovered in a catch tray **790.** The amount of coating applied is governed by air pressure, angle of the air jet, machine speed and resin solids. In blade coating, a backing roll **730** is used to carry the paper **720** to a flexible steel blade **740** which acts as the metering device. The coatweight then depends on blade angle and pressure, solution or dispersion solids, machine speed as well as substrate roughness compressibility and permeability.

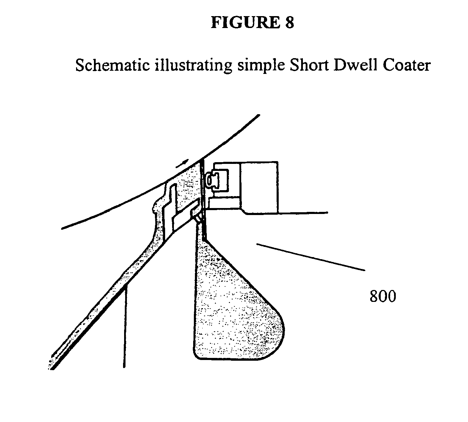

In rod coating, the excess solution or dispersion is removed by either a smooth or a wire wound rotating rod (Mayer bar). The amount of coating applied is governed by wrap around the applicator roll, wire diameter around the rod, web tension and coating solution or dispersion viscosity and solids. A further method of application is cast-coating in which a layer of polymer is coated onto a smooth, heated cylinder then transferred in a semi-dry state to the surface of the paper. Such methods are commonly used when a very smooth, glossy surface is applied but operate at slower speeds than blade coating, Additives such as casein may be used to obtain desired bulking and release properties in the cast coating. Short-dwell coaters combine the application and metering stages in one unit. A non-limiting schematic illustrating various aspects of a simple short dwell coater 800 is shown in Figure 8. Short dwell coaters are well known to those skilled in the art, see e.g., U.S. Patent No. 4,250,211.

Other methods of applying the polymer solution or dispersion to the paper include spraying through fine nozzles on a spray beam or using an air-jet sprayer as in paint application. This method limits solution solids and requires high levels of filtering, but is appropriate for spraying polymer dispersions between the plies of a multiply sheet as in paperboard production. Foam addition is another possibility. A foam generator and applicator system may be used, along with a foam builder such as a protein or surfactant blend. One or more of the above coating methods may be used.

In many cases thickening agents or rheology modifiers are used to improve the coverage and uniformity of the coating. The performance of hydroxy-phenoxyether polymer as a barrier coating may be improved by the addition of platy clays, preferably at a level below the critical pigment volume concentration. After coating, the coated paper may be calendered to improve surface smoothness.

Preferred embodiments provide laminates and processes for making them. As used herein, "laminate" is a broad term that is used in its usual sense to encompass layered structures, here formed from a layer of paper, a layer of a solid material such as a second paper or non-paper material, and a hydroxy-phenoxyether polymer. The polymer may be a separate layer and/or may be contained within one or more of the paper layers, and preferably serves to bond one or more of the layers to one another, The solid material may be virtually any material including paper, metal, foam, e.g., plastic foam, wood, polymer e.g., thermoplastic polymer, thermoset polymer, filled polymer (e.g., contains fibers or particles of organic or inorganic filler), glass, stone, concrete, and ceramic. A preferred laminate is comprised of hydroxy-phenoxyether polymer, at least one layer comprised of paper, and at least one layer comprised of a second paper or a solid non-paper material. Preferably, the laminate is comprised of from about 1% to about 50%, more preferably about 2% to about 30%, even more preferably about 3% to about 20%, most preferably about 5% to about 15%, by weight based on total laminate weight, of the hydroxy-phenoxyether polymer.

A preferred laminate displays synergism as compared to the individual components of the laminate. The term "synergism," as used herein, is a broad term and is used in its ordinary sense to include interactions between parts that produce a result that is greater than the sum of the individual effects. For instance, a preferred laminate can display synergism by exhibiting a physical property which is greater than would be expected based on the rule of mixtures, on a weight basis. More preferably, a laminate displays synergistic strength, e.g., has greater strength, most preferably flexural strength, than the sum of the corresponding strengths of each of its individual components, adjusted for the weights of the components in the laminate.

A preferred laminate is further comprised of additional materials or fillers, more preferably a fibrous materials. Preferred fibrous materials include plant fibers made from wood pulp, cotton fibers, hemp, bagasse, abaca, flax, southern pine, southern hardwood fibers, cellulose, wheat, starch, modified starch, chitin, chitosan, keratin, cellulose acetate, cellulose materials derived from agricultural products, gluten, nut shell flour, wood flour, corn cob flour, guar gum, and mixtures thereof.

A preferred embodiment provides a laminate that is less permeable to gases and water vapor, as compared to a comparable laminate, As used herein, a "comparable laminate" does not contain a hydroxy-phenoxyether polymer, but is in all other meaningful respects substantially identical to the laminate containing the hydroxy-phenoxyether polymer that is the subject of the test. For instance, a preferred laminate having a thickness of one millimeter (mm) and comprised of a 0.4 mm first paper layer, a 0.4 mm second paper layer and a 0.2 mm hydroxy-phenoxyether polymer layer is less permeable to gases and water vapor than a comparable laminate comprised of a 0.5 mm first paper layer and a 0.5 mm second paper layer but without the hydroxy-phenoxyether polymer. The inventors have found that the permeability of a laminate may be adjusted by controlling the amount of hydroxy-phenoxyether polymer incorporated therein. Relative to a comparable laminate as defined above, the laminate preferably exhibits lower permeability to gases such as oxygen, nitrogen, carbon dioxide, and/or water vapor. Most preferably, the amount of hydroxy-phenoxyether polymer in the laminate is effective to allow the desired degree of gas permeability, depending on the particular application, as discussed elsewhere herein. Water vapor and gas permeability may be determined by methods known to those skilled in the art, as discussed elsewhere herein.

A preferred laminate is comprised of an amount of a hydroxy-phenoxyether polymer that is effective to provide the laminate with an increase in sizing, preferably as manifested by an increase in resistance to water, oil and/or grease as compared to a comparable laminate. For applications where water resistance is desirable, the increase in sizing is preferably manifested as a decrease in Cobb sizing of about 5% or more, as compared to a comparable laminate. For applications where oil resistance is desirable, the increase in sizing is preferably manifested as an increase in the Kit value of about one or more, as compared to a comparable laminate. For applications where grease resistance is desirable, the increase in sizing is preferably manifested as an increase in the turpentine test value of about 5% or more, as compared to a comparable laminate.

Preferably, the process for forming the laminate proceeds by pressing together one or more of the solid materials in such a way as to allow the hydroxy-phenoxyether polymer to at least partially bond the layers together to form a laminate. More preferably, the process comprises bringing paper into contact with a solid material, in the presence of a solution or dispersion comprised of a hydroxy-phenoxyether polymer to form a wet laminate, followed by drying. The paper may be a wet paper or a coated paper as described herein. If the paper is already wet with the solution or dispersion comprised of a hydroxy-phenoxyether polymer, then further amounts of polymer solution or dispersion may be used but are not required. More preferably, the process comprises forming a wet laminate by bringing the wet paper into contact with a solid material, then drying said wet laminate to form a laminate, optionally with pressure to create a better bond between the layers. Even more preferably, the process comprises forming a wet laminate by bringing a coated paper into contact with a solution or dispersion comprised of a hydroxy-phenoxyether polymer, and optionally into further contact with another paper or non-paper material, then drying the wet laminate to form a laminate, optionally with pressure to create a better bond between the layers. Pressure is preferably applied by running the laminate between rollers. Multiple layers may be formed by repeating the process and/or by bringing together multiple layers simultaneously.

Coating processes as described herein may also be used to apply dispersions of hydroxy-phenoxyether polymer to the surface of paper or board for the purpose of laminating it to another sheet. Sheets of several layers may be built up to provide feedstock for folding cartons, liquid packaging and pouches. The hydroxy-phenoxyether polymer may also be applied between the layers as a foam composition instead of by a coating process. The individual sheets or plies of the laminate may themselves be pre-treated with hydroxy-phenoxyether polymer by any of the methods outlined herein. In this way a multi-ply composite structure may be built up with a relatively high polymer content, suitable for thermo-plastic forming, e.g., for trays and inserts.

Interlayer-addition of hydroxy-phenoxyether polymer by coating or foam application may also be used in the production of spirally wound paper tubes, cores and containers. The hydroxy-phenoxyether polymer may act as both inter-layer adhesive and reinforcing agent to improve strength and rigidity.

In preferred embodiments, the paper is readily recyclable. In embodiments where the hydroxy-phenoxyether polymer is soluble in aqueous acid, recycling may be facilitated by contacting the paper with aqueous acid to dissolve the polymer, then filtering off the residual cellulosic material. The polymer may then be recovered from the solution by precipitation with base to form a dispersion, followed by separation using known techniques e.g., decantation, filtration, centrifugation, etc., or the dispersion may be used directly in the process for making paper as described elsewhere herein. A preferred process for obtaining recycled hydroxy-phenoxyether polymers comprises providing a paper comprising a hydroxy-phenoxyether polymer, preferably a paper comprised of an amount of the hydroxy-phenoxyether polymer in the range of from about 1 % to about 10%, by weight based on total paper weight; contacting the paper with an aqueous solution comprising about 1-50% acid by weight, preferably 10 to 20% acid by weight, preferably acetic acid or phosphoric acid, to at least partially dissolve the hydroxy-phenoxyether polymer to form an acidic hydroxy-phenoxyether polymer solution; separating the acidic hydroxy-phenoxyether polymer solution from any solids present (e.g., wet cellulosic material); adding a base, preferably a hydroxide of an alkali metal or alkaline earth metal, more preferably an aqueous solution of NaOH or KOH, to the acidic hydroxy-phenoxyether polymer solution to form a hydroxy-phenoxyether polymer precipitate; and separating the hydroxy-phenoxyether polymer precipitate, preferably by settling, decantation, pressing, filtration, or centrifugation. The separated polymer thus recovered is a recycled hydroxy-phenoxyether polymer that may be used in any of the processes or materials described herein that call for the use of a hydroxy-phenoxyether polymer.

In preferred embodiments where the hydroxy-phenoxyether polymer is a thermoplastic, the paper may be recycled directly by heating the paper to soften or melt the polymer, then molding or otherwise processing the paper into the desired shape to form a product comprised of recycled paper, in whole or part. Additional polymer, cellulosic material, and/or other additives may be added or removed during recycling and/or processing.

### Recycling Methods

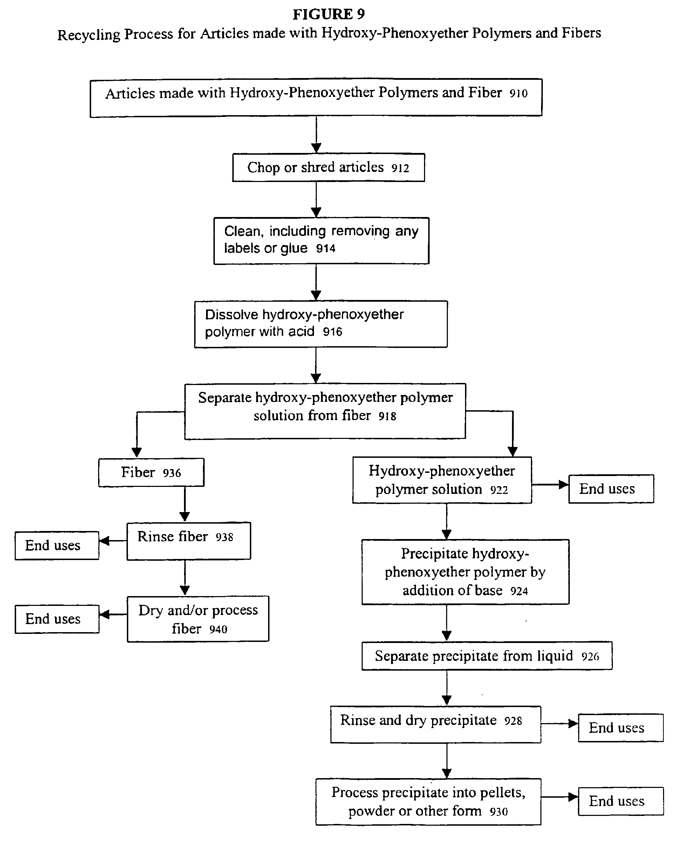

In accordance with one preferred embodiment, the hydroxy-phenoxyether polymer used in methods and materials disclosed herein comprises at least some recycled hydroxy-phenoxyether polymer. When, in the discussion below, it states that the fiber or polymer may be "used", such uses include, but are not limited to, those discussed in the present application. One method for obtaining recycled hydroxy-phenoxyether polymer is that in FIGURE 9, a flow chart showing a preferred process for obtaining recycled hydroxy-phenoxyether polymer and fiber from articles 910 made with various fibers and hydroxy-phenoxyether polymers. The method noted below may also be used to recycle other materials which comprise cellulose or other fibers and hydroxy-phenoxyether polymer whether or not such materials may be appropriately designated as "paper."

As noted in FIGURE 9, the first portions of the method relate to preparation of the articles to be recycled. The first step relates to breaking the articles down into smaller pieces or "flakes" **912**. Because some of the articles containing materials to be recycled are relatively large, the articles are preferably granulated, chopped, shredded, comminuted, grated, or otherwise made into smaller pieces. The size of such pieces is not important

The second part of the process is cleaning **914.** The recycled articles often contain dirt, food particles, grease, labels, adhesive, or other items or debris attached to them which should be removed by cleaning. Cleaning may be accomplished by steam treatment in an aspirator, caustic wash, washing with water either with or without cleaning solution, or treatment by solvents or cleaning solutions not in the presence of water. Preferred cleaning solutions are those which do not dissolve the hydroxy-phenoxyether polymers. e.g. those which are neutral or basic in character or not good solvents for the plastic. Following exposure to the cleaning agents, the materials are optionally rinsed and/or dried before proceeding with the process.

Following preparation, the flakes are combined with an aqueous solution containing about 1-50%, more preferably about 5-20% acetic acid by weight **916.** The pH of the solution is preferably below pH 4, more preferably about pH 3.0-3.5 or less. The flakes are combined with the acid solution for a time period sufficient to result in dissolution of the hydroxy-phenoxyether polymer, preferably for about 0.5 to 5 hours at about 25-95°C with stirring or agitation.

Following dissolution of the hydroxy-phenoxyether polymer, the hydroxy-phenoxyether polymer solution **922** is separated from the other materials in the mixture, primarily fiber **936.** The separation **918** is preferably done by filtration, but may be done by any method capable of separating solids and liquids such as decantation, centrifugation or settling. The solutions made from recycled materials may be used without further recycling processing as discussed below, either before or after separation of the solid (fiber) portion. Uses for such solutions, include, but are not limited to, the methods and processes disclosed in the present application.

The acidic hydroxy-phenoxyether polymer solution may undergo additional treatment to partially or fully precipitate the hydroxy-phenoxyether polymer from the solution to give a dispersion or solid. Precipitation **924**, whether partial or complete, is done by addition of one or more basic (alkaline) materials. Preferably, the basic compound is a strong base such as sodium hydroxide or potassium hydroxide in the form of a solution. As the base is added, the pH of the solution will begin to rise. As the pH of the solution approaches pH 4, precipitate may begin to form. As the pH rises above pH 4, the amount of precipitate increases, with more precipitate forming at pH 5 and pH 6, until at about pH 7 at which point precipitation is substantially complete.

The precipitated solutions or dispersions made from recycled materials may be used without further recycling processing as discussed below. Furthermore, the dispersion formation may be done in the presence of the fiber (without filtering), following addition of new fiber material, or some combination of the two. The dispersions formed from recycled materials may be used in the same manner as those formed from virgin materials including, but not limited to, the methods and processes disclosed in the present application.

Following precipitation, the hydroxy-phenoxyether polymer is separated **926** from the liquid component or mother liquor from which the precipitate formed. The solids may be separated from the liquid by any method capable of separating solids and liquids, preferably filtration, pressing, decantation, centrifugation or settling. The hydroxy-phenoxyether polymer precipitate is preferably rinsed 928 to remove any salts or other materials which may deposit on the precipitate from the liquid portions. Preferred rinsing media include water, preferably distilled and/or deionized water, and solvents in which the hydroxy-phenoxyether polymer is insoluble or only marginally soluble, with water being preferred. The rinse water may be heated to aid the dissolution of residues on the precipitate. The precipitate is then dried 928. Drying may be accomplished by air drying, vacuum drying with or without added heat, oven drying, IR lamp drying, desiccants, or other methods which aid in the evaporation or elimination of water.

The precipitate may be used following drying or it may be processed **930** before use. Further processing of the precipitate prior to use includes, without limitation, pulverization to form a powder and extrusion to form sheets or pellets. Such processing may include the addition of one or more additives. Suitable additives include, without limitation, mold release agents, dyes, and lubricants. The additives may be dry mixed with the hydroxy-phenoxyether polymer or added to a melt of the hydroxy-phenoxyether polymer.

Following separation from the acidic hydroxy-phenoxyether polymer solution, the fiber is preferably rinsed 938 with water. The rinse water is preferably deionized and/or distilled, and either neutral or slightly acidic so as to deter precipitation of any hydroxy-phenoxyether polymer onto the fiber during rinsing. In accordance with one preferred embodiment, the fiber is first rinsed with an acidic solution having a pH below about pH 4, followed by a second rinse with water having a pH at or near neutral.

The fiber may then be treated by drying or further processing **940**. Drying of the fiber is done by a method such as air drying, vacuum drying with or without added heat, oven drying, IR lamp drying, desiccants, or another method which aids in the evaporation or elimination of water. Further processing may be done to influence properties of the fiber which may enhance its ability to bind with hydroxy-phenoxyether polymer. Such methods are discussed elsewhere herein, and may be done either before or after drying.

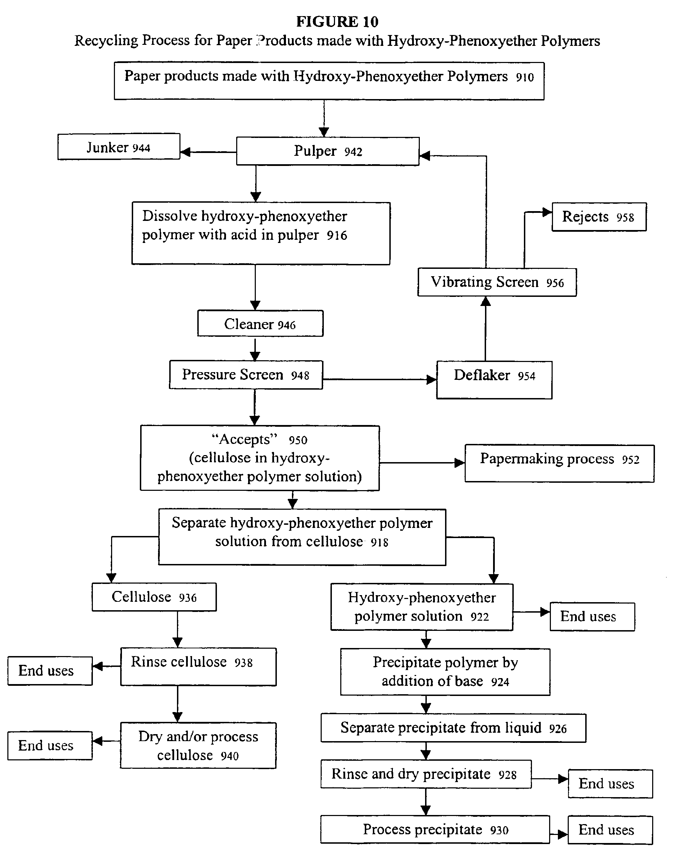

Paper and other articles treated with lower levels of hydroxy-phenoxyether polymer for sizing and lower levels of dry or wet strength could be treated as part of a conventional paper mill recycling system, enabling the cellulose or other such fibers to be recovered and reused without recycling the polymer. If, however, the article or paper has higher levels of hydroxy-phenoxyether polymer or if recycling of the hydroxy-phenoxyether polymer is desired, a preferred method for such recycling is shown in FIGURE 10. Referring to FIGURE 10, there is an alternate method of recycling articles made from fiber and hydroxy-phenoxyether polymer, described in terms of a preferred embodiment using paper made from cellulose.

Paper for recycling is usually baled and brought to the mill. The bales are dropped into the pulper **942**, a large vat containing water and fitted with a high-shear agitator. The combination of wetting and mechanical action breaks the hydrogen bonds amongst the cellulose fibers to make a pulp slurry. The water in the pulper is acidified **916,** as discussed above, to dissolve the hydroxy-phenoxyether polymer. Baling wires and other gross contaminants are removed from the pulper by a 'junker' **944.** The pulp and hydroxy-phenoxyether polymer solution is discharged from the pulper and then cleaned **946** and screened **948** to further remove contaminants, The good fiber together with the hydroxy-phenoxyether polymer solution, 'accepts' **950,** may be processed to make paper **952** or other hydroxy-phenoxyether polymer/fiber materials such as are disclosed elsewhere herein, or they may undergo a separation process **918.** Preferably, separation of the cellulose fibers and hydroxy-phenoxyether polymer solution, and any further processing of the fibers and/or hydroxy-phenoxyether polymer solution proceeds as discussed above.

Materials which are not "accepts" pass into the deflaker **954** and then through a vibrating screen **956.** Any usable pulp material is then redeposited in the pulper **942** with the remaining undesirable materials being discarded as "rejects" **958.**

### EXAMPLES

### Examples 1.5

Dry tensile, wet tensile and Cobb sizing were determined on a series of paper sheets prepared from unrefined bleached softwood kraft having a consistency of 0.75% using a laboratory handsheet former. A 10% solution of a "BLOX®" hydroxy-phenoxyether polymer (BLOX 0005®, Dow Chemical Co., Midland MI) in 8% acetic acid was prepared at 90° C and while still hot, was diluted with 20% distilled water, giving a final polymer concentration of 8%. This solution was intermixed with the pulp slurry so that the amount of polymer was 5% by weight, based on weight of cellulosic material, in the resulting handsheets (Examples 2, 3 and 4). The basis weight of the handsheets was 315 g/m². Example 1C was a comparable paper that was run in the same way as Example 2 except without hydroxy-phenoxyether polymer. Examples 3 and 4 were run in the same way as Example 2 except that the polymer was precipitated in the presence of the pulp slurry by the addition of NaOH or KOH, respectively. Example 5C was run in the same way as Example 2 except that a commercially available wet-strength resin (KYMENE 557, Hercules) was used instead of a hydroxy-phenoxyether polymer. The results in Table 1 show that 5% hydroxy-phenoxyether polymer was effective to substantially increase the dry tensile strength, wet tensile strength and sizing of paper into which it was incorporated. As compared to KYMENE 557, wet tensile strength and sizing were substantially improved.

**Table 1**

| **No.** | **Additive** | **Dry Tensile Strength (Nm)** | **Wet Tensile Strength (Nm)** | **Cobb (g/m²)** |
|---|---|---|---|---|
| 1C | None | 1.1 | 0 | 854 |
| 2 | 5% BLOX® | 1.7 | 0.76 | 13 |
| 3 | 5% BLOX® + NaOH | 2.3 | 0.38 | 95 |
| 4 | 5% BLOX® + KOH | 2.1 | 0.78 | 24 |
| 5C | 5% KYMENE 557 | 5.9 | 0.43 | 2804 |

### Examples 6-9

Examples 6-9 were run in the same way as Examples 1-4, except that the basis weight of the paper sheets was 345 g/m² and the amount of BLOX® was 15% by weight, based on total weight of cellulosic material. The results in Table 2 show that 15% hydroxy-phenoxyether polymer was effective to substantially increase the dry tensile strength, wet tensile strength and sizing of paper into which it was incorporated.

**Table 2**

| **No.** | **Additive** | **Dry Tensile Strength (Nm)** | **Wet Tensile Strength (Nm)** | **Cobb (g/m²)** |
|---|---|---|---|---|
| 6C | None | 1.0 | 0 | 919 |
| 7 | 15% BLOX® | 1.6 | 0.64 | 45 |
| 8 | 15% BLOX® + NaOH | 4.6 | 1.6 | 25 |
| 9 | 15% BLOX® + KOH | 4.7 | 1.9 | 24 |

### Examples 10-13

Examples 10-13 were run in the same way as Examples 1-4, except that the basis weight of the paper sheets was 375 g/m² and the amount of BLOX® was 25% by weight, based on total weight of cellulosic material. The results in Table 3 show that 25% hydroxy-phenoxyether polymer was effective to substantially increase the dry tensile strength, wet tensile strength and sizing of paper into which it was incorporated.

**Table 3**

| **No.** | **Additive** | **Dry Tensile Strength (Nm)** | **Wet Tensile Strength (Nm)** | **Cobb (g/m²)** |
|---|---|---|---|---|
| 10C | None | 0.9 | 0 | 898 |
| 11 | 25% BLOX® | 1.8 | 1.0 | 55 |
| 12 | 25% BLOX® + NaOH | 5.9 | 2.4 | 26 |
| 13 | 25% BLOX® + KOH | 6.3 | 2.6 | 19 |

### Examples 14-16

Examples 14-16 were run in the same way as Examples 1-4, except that a refined bleached softwood kraft having a consistency of 1.5% was used instead of the unrefined bleached softwood kraft and no NaOH neutralizations were performed. The results in Table 4 show that 5% hydroxy-phenoxyether polymer was effective to substantially increase the dry tensile strength, wet tensile strength and sizing of paper into which it was incorporated.

**Table 4**

| **No.** | **Additive** | **Dry Tensile Strength (Nm)** | **Wet Tensile Strength (Nm)** | **Cobb (g/m²)** |
|---|---|---|---|---|
| 14C | None | 6.3 | 0.2 | 646 |
| 15 | 5% BLOX® | 7.6 | 2.0 | 371 |
| 16 | 5% BLOX® + KOH | 7.5 | 3.8 | 27 |

### Examples 17-19

Examples 17-19 were run in the same way as Examples 6-9, except that a refined bleached softwood kraft having a consistency of 1.5% was used instead of an unrefined bleached softwood kraft and no NaOH neutralizations were performed. The results in Table 5 show that 15% hydroxy-phenoxyether polymer was effective to substantially increase the dry tensile strength, wet tensile strength and sizing of paper into which it was incorporated.

**Table 5**

| **No.** | **Additive** | **Dry Tensile Strength (Nm)** | **Wet Tensile Strength (Nm)** | **Cobb (g/m²)** |
|---|---|---|---|---|
| 17C | None | 7.8 | 0.23 | 782 |
| 18 | 15% BLOX® | 8.56 | 3.3 | 295 |
| 19 | 15% BLOX® + KOH | 11.6 | 5.2 | 28 |

### Examples 20-22

Examples 17-19 were run in the same way as Examples 10-13, except that a refined bleached softwood kraft having a consistency of 1.5% was used instead of an unrefined bleached softwood kraft and no NaOH neutralizations were performed. The results in Table 6 show that 25% hydroxy-phenoxyether polymer was effective to substantially increase the wet tensile strength and sizing of paper into which it was incorporated.

**Table 6**

| **No.** | **Additive** | **Dry Tensile Strength (Nm)** | **Wet Tensile Strength (Nm)** | **Cobb (g/m²)** |
|---|---|---|---|---|
| 20C | None | 9.1 | 0.35 | 897 |
| 21 | 25% BLOX® | 8.36 | 3.9 | 26 |
| 22 | 25% BLOX® + KOH | 10.8 | 4.62 | 39 |

### Examples 23-25

Examples 23-25 were run in the same way as Examples 1-4, except that a pulp slurry of repulped egg boxes having a consistency of 0.75% was used instead of the unrefined bleached softwood kraft and no NaOH neutralizations were performed. The results in Table 7 show that 5% hydroxy-phenoxyether polymer was effective to substantially increase the dry tensile strength, wet tensile strength and sizing of paper into which it was incorporated.

**Table 7**

| **No.** | **Additive** | **Dry Tensile Strength (Nm)** | **Wet Tensile Strength (Nm)** | **Cobb (g/m²)** |
|---|---|---|---|---|
| 23C | None | 4.4 | 1.9 | 93 |
| 24 | 5% BLOX® | 4.5 | 3.4 | 14 |
| 25 | 5% BLOX® + KOH | 6.8 | 4.2 | 24 |

### Examples 26-28

Examples 26-28 were run in the same way as Examples 6-9, except that a pulp slurry of repulped egg boxes having a consistency of 0.75% was used instead of the unrefined bleached softwood kraft and no NaOH neutralizations were performed. The results in Table 8 show that 15% hydroxy-phenoxyether polymer was effective to substantially increase the dry tensile strength, wet tensile strength and sizing of paper into which it was incorporated.

**Table 8**

| **No.** | **Additive** | **Dry Tensile Strength (Nm)** | **Wet Tensile Strength (Nm)** | **Cobb (g/m²)** |
|---|---|---|---|---|
| 26C | None | 5.2 | 1.9 | 157 |
| 27 | 15% BLOX® | 6.0 | 5.2 | 26 |
| 28 | 15% BLOX® + KOH | 6.4 | 5.1 | 21 |

### Examples 29-31

Examples 29-31 were run in the same way as Examples 10-13, except that a pulp slurry of repulped egg boxes having a consistency of 0.75% was used instead of the unrefined bleached softwood kraft and no NaOH neutralizations were performed, The results in Table 9 show that 25% hydroxy-phenoxyether polymer was effective to substantially increase the dry tensile strength, wet tensile strength and sizing of paper into which it was incorporated.

**Table 9**

| **No.** | **Additive** | **Dry Tensile Strength (Nm)** | **Wet Tensile Strength (Nm)** | **Cobb (g/m²)** |
|---|---|---|---|---|
| 29C | None | 4.9 | 3.3 | 46 |
| 307 | 25% BLOX® | 5.7 | 4.8 | 30 |
| 31 | 25% BLOX® + KOH | 6.7 | 4.5 | 21 |

### Examples 32-41

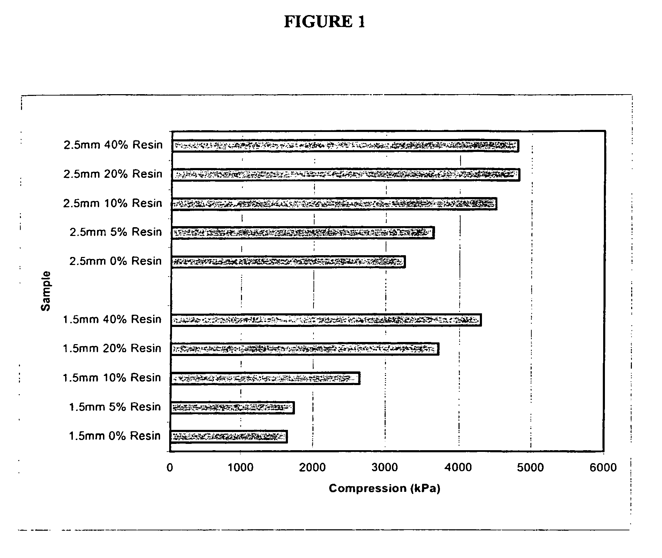

Paper sheets were prepared by the general procedure of Examples 1-4, except that the amount of polymer was 0% (control), 5%, 10%, 20% and 40% and all of the polymers were neutralized with KOH. The resulting sheets were then pulp molded to produce samples 1.5 mm and 2.5 mm in thickness and the compressive strengths of these samples were measured as shown in Figure 1. Figure 2 shows the results of cyclic compression testing. These results show that hydroxy-phenoxyether polymer was effective to substantially increase the compressive strength of paper into which it was incorporated.

### Example 42

Paperboard samples from 26 lbs, (11.8 kg) to 69 lbs. (31.3 kg) stock were coated with a dispersion of hydroxy-phenoxyether polymer. The polymer was found to provide significant increase in water repellency. At 15 grams/m² of coat weight, the paper passed the 3M oil resistance test (3M Kit Test TAPPI Useful Method 557) up to the # 12 test solution (45% toluene and 55% heptane). The test results showed that the coated paper provided various levels of protection with the greatest protection provided by a coating with a thickness estimated to be about 0.5 - 1.0 mil (0.0127mm - 0.0254mm) thick. Impregnated paper coated with the polymer film (estimated coating thickness of about 0.5 mil (0.0127 mm)) passed the # 12 soak test.

### Example 43C-48

Handsheets were prepared as described in Example 2 above except that the basis weight of the sheets was 360 g/m² (300 grams cellulosic material, 60 grams polymer). Then sheets were then repulped in either water or an 8% acetic acid solution to produce two batches of slurry, an water batch and an acetic acid batch.

The recyclability of the cellulosic material and the polymer was then assessed for each of the two batches in two different ways. In the first way, handsheets were made in the manner described above from both the water batch ("Re-made w/water") and the acetic acid batch (Re-made w/acetic acid"), using KOH. In the second way, the water and acetic acid solutions were separated from the cellulosic material in each of the water and acetic acid batches, respectively, and each combined with fresh cellulosic material and KOH to make a new water slurry and a new acetic acid slurry, respectively. Handsheets were then prepared as described above from the new water slurry ("New w/water") and from the new acetic acid slurry ("New w/acetic acid), using KOH.

The burst strength and Cobb sizing of each of the four groups of recycled sheets was measured, along with the burst strengths and Cobb sizing of the initial, unrecycled sheets ("Initial") and control sheets made without polymer ("Control"). The results are shown below in Table 10 under the heading "1^{st} Recycle." Each of the sheets were then recycled again as described above to form new sheets. The strengths and sizing of these sheets are shown under the heading "2^{nd} Recycle" in Table 10.

**Table 10**

| | | **Burst Strength (± 10 kPa)** | | **Cobb Sizing (± 50 gsm)** | |
|---|---|---|---|---|---|
| **Ex.** | **Paper** | **1^{st} Recycle** | **2^{nd} Recycle** | **1^{st} Recycle** | **2^{nd} Recycle** |
| 43C | Control | 125 | 125 | 1800 | 1800 |
| 44 | Initial | 500 | 500 | 100 | 100 |
| 45 | Re-made w/water | 250 | 190 | 1750 | 1700 |
| 46 | Re-made w/acetic acid | 210 | 180 | 200 | 450 |
| 47 | New w/water | 200 | 180 | 1550 | 1750 |
| 48 | New w/acetic acid | 250 | 220 | 80 | 120 |

## Claims

1. A process for making a paper sheet or three-dimensional object, comprising
providing a pulp slurry or paper web,
providing a solution or dispersion comprising a hydroxy-phenoxyether polymer,
intermixing said solution or dispersion with said pulp slurry or paper web to form an admixture, and
forming a paper sheet or three-dimensional object from said admixture,
wherein the pH of the solution, dispersion or admixture is adjusted to precipitate at least a portion of said hydroxy-phenoxyether polymer and said hydroxy-phenoxyether polymer is used in an amount that is effective to provide said paper sheet or three-dimensional object with an increase in sizing or strength.

2. A process as claimed in Claim 1, which comprises adjusting the pH of said solution, dispersion or admixture to be in the range of about 4 to about 7.

3. A process as claimed in Claim 1, wherein said intermixing is carried out by spraying said solution or dispersion onto said paper web.

4. A process as claimed in Claim 3, wherein the paper web is in the form of a three-dimensional object.

5. A process as claimed in Claim 1, wherein said dispersion has a number average particle size of about 100 micrometer or less.

6. A process as claimed in Claim 1, wherein said hydroxy- phenoxyether polymer comprises a recycled hydroxy-phenoxyether polymer.

7. A process as claimed in Claim 1, wherein said increase in strength is an increase in wet tensile strength, dry tensile strength, wet flexural strength, or dry flexural strength of about 5% or more, as compared to a comparable paper sheet or three-dimensional object that does not contain a hydroxy- phenoxyether polymer.

8. A process as claimed in Claim 1, wherein the forming comprises depositing the admixture on a mold and applying a vacuum to draw water and/or air through the mold.

9. A process as claimed in Claim 8, wherein the forming further includes drying.

10. A process as claimed in Claim 1, wherein the forming comprises depositing the admixture on a papermaking wire, draining water, and optionally pressing to form wet paper.

11. A process as claimed in Claim 10, wherein the draining water includes using suction.

12. A process as claimed in Claim 10, wherein the forming further comprises heating said wet paper.

13. A process as claimed in Claim 10, which further comprises
forming a wet laminate by bringing said wet paper into contact with a solid material, and
drying said wet laminate to form a laminate.

14. A laminate produced according to the process of Claim 13 comprised of from about 1% to about 50%, by weight based on total laminate weight, of a hydroxy-phenoxyether polymer, at least one layer comprised of paper, and at least one layer comprised of a second paper or a solid non-paper material.

15. A laminate as claimed in Claim 14, wherein said hydroxy- phenoxyether polymer is a poly (hydroxyamino ether) or a poly(hydroxy ester other).

16. A laminate as claimed in Claim 14, wherein said non-paper material is selected from the group consisting of metal, textile fabric, foam, thermoplastic polymer, thermoset polymer, and filled polymer.

17. A laminate as claimed in Claim 14 that displays synergistic strength.

18. A laminate as claimed in Claim 14 which is further comprised of a fibrous material.

19. A laminate as claimed in Claim 18, wherein said fibrous material is selected from the group consisting of plant fibers made from wood pulp, cotton fibers, hemp, bagasse, abaca, flax, southern pine, southern hardwood fibers, cellulose, wheat, starch, modified starch, chitin, chitosan, keratin, cellulose acetate, cellulose materials derived from agricultural products, gluten, nut shell flour, wood flour, corn cob flour, guar gum, and mixtures thereof

20. A laminate as claimed in Claim 14, wherein said laminate is less permeable to oxygen, carbon dioxide, nitrogen, or water vapor as compared to a comparable laminate that does not contain a hydroxy- phenoxyether polymer.

21. A laminate as claimed in Claim 14, wherein said laminate is comprised of an amount of a hydroxy phenoxyether polymer that is effective to provide the laminate with an increase in sizing.

22. A laminate as claimed in Claim 21, wherein said increase in sizing is manifested as an increase in resistance to water, oil or grease, as compared to a comparable laminate.

23. A paper sheet or three-dimensional object made according to the process of any of Claims 1 through 12.

24. A paper sheet or three-dimensional object as claimed in Claim 23, wherein the sheet or object comprises about 0.1 % to about 25% by weight of hydroxy-phenoxyether polymer based on total paper weight.

25. A paper sheet or three-dimensional object as claimed in Claim 23, wherein the sheet or object comprises about 0.5% to about 20% by weight of hydroxy-phenoxyether polymer based on total paper weight.

26. A paper sheet or three-dimensional object as claimed in Claim 23, wherein said increase in sizing is manifested as a decrease in Cobb sizing of about 5% or more, as compared to a comparable paper that does not contain a hydroxy- phenoxyether polymer.

27. A paper sheet or three-dimensional object as claimed in Claim 23, wherein said increase in sizing is manifested as an increase in resistance to oil or grease, as compared to a comparable paper.

28. A paper sheet or three-dimensional object as claimed in Claim 23, wherein said increase in sizing is effective to provide said paper with a Cobb sizing value of about 50 g/m² or less.

29. A paper sheet or three-dimensional object as claimed in Claim 23, wherein said increase in strength is an increase in wet tensile strength, dry tensile strength, wet flexural strength, or dry flexural strength of about 5% or more, as compared to a comparable paper that does not contain a hydroxy- phenoxyether polymer.

30. A paper sheet or three-dimensional object as claimed in Claim 23, wherein said paper is less permeable to oxygen, carbon dioxide, nitrogen, or water vapor as compared to a comparable paper that does not contain a hydroxy-phenoxyether polymer.

31. A paper sheet or three-dimensional object as claimed in Claim 23, wherein said paper is corrugated paper and wherein said increase in strength is an increase in wet flexural strength.

32. Use of a paper sheet or three-dimensional object as claimed in any of Claims 23 through 30 in writing paper, drawing paper, paper towels, tissues, paper bags, paper boxes, cardboard boxes, mailing tubes, file folders, photo paper, glossy paper, cardboard, corrugated cardboard, disposable diapers, adhesive labels, honeycomb structures, and packaging material.

## Patentansprüche

1. Verfahren zur Herstellung eines Papierbogens oder eines dreidimensionalen Gegenstands, umfassend:
Bereitstellen einer Faserbreiaufschlämmung oder einer Papierbahn,
Bereitstellen einer Lösung oder einer Dispersion, die ein Hydroxi-Phenoxietherpolymer umfasst;
Vermischen der Lösung oder Dispersion mit der Faserbreiaufschlämmung oder der Papierbahn, um eine Beimischung zu bilden, und
Bilden eines Papierbogens oder eines dreidimensionalen Gegenstands aus der Beimischung,
wobei der pH-Wert der Lösung, Dispersion oder Beimischung so eingestellt wird, dass zumindest ein Teil des Hydroxi-Phenoxietherpolymers ausgefällt wird, und das Hydroxi-Phenoxietherpolymer in einer Menge verwendet wird, die wirksam ist, um den Papierbogen oder den dreidimensionalen Gegenstand mit einer Erhöhung der Schlichtung oder der Stärke zu versehen.

2. Verfahren nach Anspruch 1, umfassend das Einstellen des pH-Werts der Lösung, Dispersion oder Beimischung auf den Bereich von etwa 4 bis etwa 7.

3. Verfahren nach Anspruch 1, wobei das Vermischen durch Sprühen der Lösung oder Dispersion auf die Papierbahn ausgeführt wird.

4. Verfahren nach Anspruch 3, wobei die Papierbahn in der Form eines dreidimensionalen Gegenstands ist.

5. Verfahren nach Anspruch 1, wobei die Dispersion eine zahlendurchschnittliche Teilchengröße von etwa 100 Mikrometern oder weniger aufweist.

6. Verfahren nach Anspruch 1, wobei das Hydroxi-Phenoxietherpolymer ein wiederverwendetes Hydroxi-Phenoxietherpolymer umfasst.

7. Verfahren nach Anspruch 1, wobei es sich bei der Erhöhung der Stärke um eine Erhöhung der Zugfestigkeit im nassen Zustand, der Zugfestigkeit im trockenen Zustand, der Biegefestigkeit im nassen Zustand, oder der Biegefestigkeit im trockenen Zustand von etwa 5 % oder mehr im Vergleich zu einem vergleichbaren Papierbogen oder dreidimensionalen Gegenstand, der kein Hydroxi-Phenoxietherpolymer enthält, handelt.

8. Verfahren nach Anspruch 1, wobei die Bildung ein Ablagern der Beimischung auf einer Form und ein Anlegen eines Vakuums, um Wasser und/oder Luft durch die Form zu ziehen, umfasst.

9. Verfahren nach Anspruch 8, wobei die Bildung ferner ein Trocknen umfasst.

10. Verfahren nach Anspruch 1, wobei die Bildung ein Ablagern der Beimischung auf einem Papierherstellungssieb, ein Ablaufen lassen von Wasser, und optional ein Pressen zum Bilden von nassem Papier umfasst.

11. Verfahren nach Anspruch 10, wobei das Ablaufen lassen des Wassers das Verwenden eines Sogs beinhaltet.

12. Verfahren nach Anspruch 10, wobei das Bilden ferner ein Erhitzen des nassen Papiers umfasst.

13. Verfahren nach Anspruch 10, ferner umfassend:
Bilden eines nassen Laminats, indem das nasse Papier mit einem festen Material in Kontakt gebracht wird, und
Trocknen des nassen Laminats, um ein Laminat zu bilden.

14. Laminat, das nach dem Verfahren von Anspruch 13 hergestellt ist, umfassend etwa 1 Gew.% bis etwa 50 Gew.%, auf Basis des gesamten Laminatgewichts, eines Hydroxi-Phenoxietherpolymers, zumindest eine Schicht, die Papier umfasst, und zumindest eine Schicht, die ein zweites Papier oder ein festes Nichtpapiermaterial umfasst.

15. Laminat nach Anspruch 14, wobei das Hydroxi-Phenoxietherpolymer ein Poly(hydroxiaminoether) oder ein Poly(hydroxiesterether) ist.

16. Laminat nach Anspruch 14, wobei das Nichtpapiermaterial aus der Gruppe gewählt wird, die aus Metall, einem Textilgewebe, Schaum, einem thermoplastischen Polymer, einem hitzehärtbaren Polymer, und einem gefüllten Polymer besteht.

17. Laminat nach Anspruch 14, das synergistische Stärke zeigt.

18. Laminat nach Anspruch 14, das ferner ein faseriges Material umfasst.

19. Laminat nach Anspruch 18, wobei das faserige Material aus der Gruppe gewählt wird, die aus Pflanzenfasern aus Holzstoff, Baumwollfasern, Hanf, Bagasse, Manilahanf, Flachs, Gelbkiefer, Southern-Hardwood-Fasern, Cellulose, Weizen, Stärke, modifizierter Stärke, Chitin, Chitosan, Keratin, Celluloseacetat, Cellulosematerialien, die von landwirtschaftlichen Produkten erlangt werden, Gluten, Nussschalenmehl, Holzmehl, Maiskolbenmehl, Guarkernmehl, und Gemischen davon besteht.

20. Laminat nach Anspruch 14, wobei das Laminat im Vergleich zu einem vergleichbaren Laminat, das kein Hydroxi-Phenoxietherpolymer enthält, gegenüber Sauerstoff, Kohlendioxid, Stickstoff oder Wasserdampf weniger durchlässig ist.

21. Laminat nach Anspruch 14, wobei das Laminat eine Menge eines Hydroxi-Phenoxietherpolymers enthält, die wirksam ist, um das Laminat mit einer Erhöhung der Schlichtung zu versehen.

22. Laminat nach Anspruch 21, wobei die Erhöhung der Schlichtung als eine Erhöhung der Beständigkeit gegenüber Wasser, Öl oder Fett im Vergleich zu einem vergleichbaren Laminat offenbart ist.

23. Papierbogen oder dreidimensionaler Gegenstand, der nach dem Verfahren eines der Ansprüche 1 bis 12 hergestellt ist.

24. Papierbogen oder dreidimensionaler Gegenstand nach Anspruch 23, wobei der Bogen oder der Gegenstand auf Basis des gesamten Papiergewichts etwa 0,1 Gew.% bis etwa 25 Gew.% Hydroxi-Phenoxietherpolymer umfasst.

25. Papierbogen oder dreidimensionaler Gegenstand nach Anspruch 23, wobei der Bogen oder der Gegenstand auf Basis des gesamten Papiergewichts etwa 0,5 Gew.% bis etwa 20 Gew.% Hydroxi-Phenoxietherpolymer umfasst.

26. Papierbogen oder dreidimensionaler Gegenstand nach Anspruch 23, wobei die Erhöhung der Schlichtung als eine Abnahme der Cobb-Schlichtung um etwa 5 % oder mehr im Vergleich zu einem vergleichbaren Papier, das kein Hydroxi-Phenoxietherpolymer enthält, offenbart ist.

27. Papierbogen oder dreidimensionaler Gegenstand nach Anspruch 23, wobei die Erhöhung der Schlichtung als eine Erhöhung der Beständigkeit gegenüber Öl oder Fett im Vergleich zu einem vergleichbaren Papier offenbart ist.

28. Papierbogen oder dreidimensionaler Gegenstand nach Anspruch 23, wobei die Erhöhung der Schlichtung wirksam ist, um das Papier mit einem Cobb-Schlichtungswert von etwa 50 g/m² oder weniger zu versehen.

29. Papierbogen oder dreidimensionaler Gegenstand nach Anspruch 23, wobei es sich bei der Erhöhung der Stärke um eine Erhöhung der Zugfestigkeit im nassen Zustand, der Zugfestigkeit im trockenen Zustand, der Biegefestigkeit im nassen Zustand, oder der Biegefestigkeit im trockenen Zustand von etwa 5 % oder mehr im Vergleich zu einem vergleichbaren Papier, das kein Hydroxi-Phenoxietherpolymer enthält, handelt.

30. Papierbogen oder dreidimensionaler Gegenstand nach Anspruch 23, wobei das Papier im Vergleich zu einem vergleichbaren Papier, das kein Hydroxi-Phenoxietherpolymer enthält, gegenüber Sauerstoff, Kohlendioxid, Stickstoff oder Wasserdampf weniger durchlässig ist.

31. Papierbogen oder dreidimensionaler Gegenstand nach Anspruch 23, wobei das Papier Wellpapier ist, und wobei die Erhöhung der Stärke eine Erhöhung der Biegefestigkeit im nassen Zustand ist.

32. Verwendung eines Papierbogens oder eines dreidimensionalen Gegenstands nach einem der Ansprüche 23 bis 30 bei Schreibpapier, Zeichenpapier, Papierhandtüchern, Papiertüchern, Papiertüten, Papierschachteln, Pappkartons, Versandrohren, Aktenordnern, Photopapier, Hochglanzpapier, Karton, Wellpappe, Wegwerfwindeln, Klebeetiketten, Wabenaufbauten, und Verpackungsmaterial.

## Revendications

1. Procédé pour fabriquer une feuille de papier ou un objet tridimensionnel, comprenant
la mise en oeuvre d'une suspension de pâte ou d'une nappe de papier,
la mise en oeuvre d'une solution ou d'une dispersion comprenant un polymère d'hydroxyphénoxyéther,
le mélange de ladite solution ou de ladite dispersion avec ladite suspension de pâte ou ladite nappe de papier pour former un mélange; et
la formation d'une feuille de papier ou d'un objet tridimensionnel à partir dudit mélange,
dans lequel le pH de la solution, de la dispersion ou du mélange est ajusté pour précipiter au moins une partie dudit polymère d'hydroxyphénoxyéther et on utilise ledit polymère d'hydroxyphénoxyéther en quantité efficace pour conférer à ladite feuille de papier ou audit objet tridimensionnel une augmentation de l'encollage ou de la résistance.

2. Procédé selon la revendication 1, qui comprend l'ajustement du pH de ladite solution, de ladite dispersion ou dudit mélange pour qu'il se situe dans la plage d'environ 4 à environ 7.

3. Procédé selon la revendication 1, dans lequel ledit mélange est effectué en pulvérisant ladite solution ou ladite dispersion sur ladite nappe de papier.

4. Procédé selon la revendication 3, dans lequel la nappe de papier se présente sous la forme d'un objet tridimensionnel.

5. Procédé selon la revendication 1, dans lequel ladite dispersion a une taille particulaire moyenne en nombre d'environ 100 micromètres ou moins.

6. Procédé selon la revendication 1, dans lequel ledit polymère d'hydroxyphénoxyéther comprend un polymère d'hydroxyphénoxyéther recyclé.

7. Procédé selon la revendication 1, dans lequel ladite augmentation de résistance est une augmentation de la résistance à la traction à l'état humide, de la résistance à la traction à l'état sec, de la résistance à la flexion à l'état humide ou de la résistance à la flexion à l'état sec d'environ 5% ou plus, en comparaison d'une feuille de papier ou d'un objet tridimensionnel comparable qui ne contient pas de polymère d'hydroxyphénoxyéther.

8. Procédé selon la revendication 1, dans lequel la formation comprend le dépôt du mélange sur un moule et l'application d'un vide pour aspirer l'eau et/ou l'air à travers le moule.

9. Procédé selon la revendication 8, dans lequel la formation comprend en outre un séchage.

10. Procédé selon la revendication 1, dans lequel la formation comprend le dépôt du mélange sur une toile de machine à papier, le drainage de l'eau et éventuellement le pressage pour former un papier humide.

11. Procédé selon la revendication 10, dans lequel le drainage de l'eau comprend l'utilisation d'une aspiration.

12. Procédé selon la revendication 10, dans lequel la formation comprend en outre le chauffage dudit papier humide.

13. Procédé selon la revendication 10, qui comprend en outre
la formation d'un stratifié humide en amenant ledit papier humide en contact avec un matériau solide et
le séchage dudit stratifié mouillé pour former un stratifié.

14. Stratifié produit selon le procédé de la revendication 13, constitué d'environ 1% à environ 50%, en poids par rapport au poids total du stratifié, d'un polymère d'hydroxyphénoxyéther, d'au moins une couche constituée de papier et d'au moins une couche constituée d'un second papier ou d'un matériau solide autre que du papier.

15. Stratifié selon la revendication 14, dans lequel ledit polymère d'hydroxyphénoxyéther est un poly(hydroxyaminoéther) or a poly(hydroxyesteréther).

16. Stratifié selon la revendication 14, dans lequel ledit matériau autre que le papier est choisi dans le groupe constitué d'un métal, d'un tissu textile, d'une mousse, d'un polymère thermoplastique, d'un polymère thermodurcissable et d'un polymère chargé.

17. Stratifié selon la revendication 14, qui présente une résistance synergique.

18. Stratifié selon la revendication 14, qui comprend en outre un matériau fibreux.

19. Stratifié selon la revendication 18, dans lequel ledit matériau fibreux est choisi dans le groupe constitué de fibres végétales fabriquées à partir de pâte de bois, de fibres de coton, de chanvre, de bagasse, d'abaca, de lin, de pin southern, de fibres de feuillus southern, de cellulose, de blé, d'amidon, d'amidon modifié, de chitine, de chitosane, de kératine, d'acétate de cellulose, de matériaux cellulosiques dérivés de produits agricoles, de gluten, de farine de coquilles de noix, de farine de bois, de farine de spathes de maïs, de gomme guar et de leurs mélanges.

20. Stratifié selon la revendication 14, dans lequel ledit stratifié est moins perméable à l'oxygène, au dioxyde de carbone, à l'azote ou à la vapeur d'eau qu'un stratifié comparable qui ne contient pas de polymère d'hydroxyphénoxyéther.

21. Stratifié selon la revendication 14, dans lequel ledit stratifié est constitué d'un polymère d'hydroxyphénoxyéther qui est efficace pour conférer au stratifié une augmentation d'encollage.

22. Stratifié selon la revendication 21, dans lequel ladite augmentation d'encollage se manifeste par une augmentation de la résistance à l'eau, à l'huile ou à la graisse, par rapport à un stratifié comparable.

23. Feuille de papier ou objet tridimensionnel fabriqué(e) selon le procédé de l'une quelconque des revendications 1 à 12.

24. Feuille de papier ou objet tridimensionnel selon la revendication 23, dans laquelle ou lequel la feuille ou l'objet comprend environ 0,1% à environ 25% en poids de polymère d'hydroxyphénoxyéther par rapport au poids total de papier.

25. Feuille de papier ou objet tridimensionnel selon la revendication 23, dans laquelle ou lequel la feuille ou l'objet comprend environ 0,5% à environ 20% en poids de polymère d'hydroxyphénoxyéther par rapport au poids total de papier.

26. Feuille de papier ou objet tridimensionnel selon la revendication 23, dans laquelle ou lequel ladite augmentation d'encollage se manifeste par une diminution de l'encollage Cobb d'environ 5% ou plus, par rapport à un papier comparable qui ne contient pas de polymère d'hydroxyphénoxyéther.

27. Feuille de papier ou objet tridimensionnel selon la revendication 23, dans laquelle ou lequel ladite augmentation d'encollage se manifeste par une augmentation de résistance à l'huile ou à la graisse, par rapport à un papier comparable.

28. Feuille de papier ou objet tridimensionnel selon la revendication 23, dans laquelle ou lequel ladite augmentation d'encollage est efficace pour conférer audit papier une valeur d'encollage Cobb d'environ 50 g/m² ou moins.

29. Feuille de papier ou objet tridimensionnel selon la revendication 23, dans laquelle ou lequel ladite augmentation de résistance est une augmentation de la résistance à la traction à l'état humide, de la résistance à la traction à l'état sec, de la résistance à la flexion à l'état humide ou de la résistance à la flexion à l'état sec d'environ 5% ou plus, par rapport à un papier comparable qui ne contient pas de polymère d'hydroxyphénoxyéther.

30. Feuille de papier ou objet tridimensionnel selon la revendication 23, dans laquelle ou lequel ledit papier est moins perméable à l'oxygène, au dioxyde de carbone, à l'azote ou à la vapeur d'eau qu'un papier comparable qui ne contient pas de polymère d'hydroxyphénoxyéther.

31. Feuille de papier ou objet tridimensionnel selon la revendication 23, dans laquelle ou lequel ledit papier est un papier ondulé et dans lequel ladite augmentation de résistance est une augmentation de la résistance à la flexion à l'état humide.

32. Usage d'une feuille de papier ou d'un objet tridimensionnel selon l'une quelconque des revendications 23 à 30 en papier d'écriture, papier à dessin, serviettes en papier, mousselines, sacs en papier, boîtes en papier, boîtes en carton, tubes d'expédition, chemises de dossiers, papier photo, papier brillant, carton, carton ondulé, couches jetables, étiquettes adhésives, structures en nid d'abeille et matériau d'emballage.
